# EUROPEAN PATENT SPECIFICATION

(11) **EP 4 671 758 B1**
(45) Date of publication and mention of the grant of the patent: **02.12.2026**
(21) Application number: 23924162.3
(22) Date of filing: 25.10.2023
(51) Int. Cl.: G01N 33/53, G01N 33/48, G01N 33/483, G06T 1/00, G06T 7/00, G06T 11/00

(54) **IMAGE DISPLAY METHOD, IMAGE DISPLAY DEVICE, AND PROGRAM**
BILDANZEIGEVERFAHREN, BILDANZEIGEVORRICHTUNG UND PROGRAMM
PROCÉDÉ D'AFFICHAGE D'IMAGE, DISPOSITIF D'AFFICHAGE D'IMAGE ET PROGRAMME

(30) Priority: 21.02.2023 JP 2023025321
(43) Date of publication of application: 31.12.2025
(73) Proprietor: SCREEN Holdings Co., Ltd., Kyoto-shi, Kyoto 602-8585 (JP)
(72) Inventor: HIRAI, Saya, Kyoto-shi, Kyoto 602-8585 (JP); HIRAI, Maki, Kyoto-shi, Kyoto 602-8585 (JP); OGI, Hiroshi, Kyoto-shi, Kyoto 602-8585 (JP); FURUTA, Tomoyasu, Kyoto-shi, Kyoto 602-8585 (JP)
(74) Representative: Goddar, Heinz J.
(86) International application number: PCT/JP2023/038520
(87) International publication number: WO 2024/176518

(56) References cited:
- EP-B1- 3 195 191
- WO-A1-2019/065105
- WO-A1-2022/172852
- JP-A- 2006 349 533
- JP-A- 2021 117 886
- US-A1- 2020 143 542
- US-A1- 2020 380 672
- BLOM SAMI ET AL: "Systems pathology by multiplexed immunohistochemistry and whole-slide digital image analysis", vol. 7, no. 1, 14 November 2017 (2017-11-14), US, pages 15580, XP055938621, ISSN: 2045-2322, Retrieved from the Internet <URL:https://www.nature.com/articles/s41598-017-15798-4.pdf> [retrieved on 20260416], DOI: 10.1038/s41598-017-15798-4
- TAKEMOTO SATOKO, SHIN YOSHIZAWA, NORIO YAMASHITA, MASAHIKO MORITA, MASAOMI NISHIMURA, HIDEO YOKOTA : "Morphology and function analyses of cell population using image processing", DRUG DELIVERY SYSTEM, vol. 36, no. 4, 1 September 2021 (2021-09-01), pages 277 - 285, XP093202726, DOI: 10.2745/dds.36.277
- DURKEE MADELEINE S., ABRAHAM REBECCA, CLARK MARCUS R., GIGER MARYELLEN L.: "Artificial Intelligence and Cellular Segmentation in Tissue Microscopy Images", THE AMERICAN JOURNAL OF PATHOLOGY, ELSEVIER INC., US, vol. 191, no. 10, 1 October 2021 (2021-10-01), US , pages 1693 - 1701, XP093202727, ISSN: 0002-9440, DOI: 10.1016/j.ajpath.2021.05.022

## Description

### TECHNICAL FIELD

The present invention relates to a technique for displaying the result of detecting cell regions from a stained image obtained by immunostaining.

### BACKGROUND ART

In recent year's research in medical or biological sciences, tissue-derived samples such as tissue samples or cell samples are analyzed in units of single cells for the purpose of, for example, elucidation of disease mechanisms, biological mechanisms, or drug action mechanisms. In immunostaining analysis, for example, quantitative and/or qualitative analysis is conducted by staining tissue-derived substances such as proteins and measuring the conditions of staining of these substances. Japanese Patent Application Laid-Open No. 2022-37567 (Document 1) proposes a technique in which, in a stained image obtained by capturing an image of a stained tissue sample, cell regions are specified by using a trained model produced by machine learning. Japanese Patent Application Laid-Open No. 2021-117886 (Document 2) proposes a technique in which, when a stained image of a tissue sample is displayed, diagnostic activities of doctors are supported by displaying the stained image and a processed image on one screen, the processed image being obtained by processing the stained image on the basis of pathological findings of the doctors.

As in Document 1, in the case where cell regions are detected from a stained image by using a trained model produced by machine learning, it is necessary to visually check in advance whether the trained model satisfies desired detection accuracy. This visual check of detection accuracy may include, for example, a check to determine whether a certain percentage or more of cells to be detected have been detected (i.e., a numerical check of detection accuracy) and a check to determine whether, among types of cells that are small in number but important for analysis, there are any cells that have not been detected (i.e., a check of detection accuracy relating to stained images obtained by a specific staining method).

An operator who checks detection accuracy visually compares, for a plurality of visual fields (e.g., a dozen to a hundred or more visual fields) set for each of a plurality of tissue samples, stained images obtained by various staining methods and the results of detecting cell regions via the aforementioned trained model. Thus, the operator needs to compare a huge number of images from different viewpoints that depend on the required type of detection accuracy, and as a result an enormous amount of time becomes necessary to verity the results of detecting cell regions.

### SUMMARY OF THE INVENTION

The present invention is intended for an image display method of displaying the result of detecting cell regions from stained images obtained by immunostaining, and it is an object of the present invention to facilitate verification of the result of detecting cell regions.

Aspect 1 of the present invention is an image display method of displaying a result of detecting a cell region from a stained image obtained by immunostaining. The image display method includes a) for each of a plurality of visual fields on a sample, preparing a stained image group that includes a plurality of types of stained images of the sample obtained by immunostaining, b) for each of the plurality of visual fields, preparing a cell detection image that indicates a cell region detected from the stained image group by a predetermined detection method, and c) overlaying and displaying the stained image group and the cell detection image on a screen. In the operation c), the screen has a display mode that is switchable between a first display mode and a second display mode. In the first display mode, a first display image group is displayed in order on the screen, the first display image group including two or more overlay images that are obtained respectively for two or more visual fields among the plurality of visual fields, the two or more overlay images each being obtained by overlaying the cell detection image and one stained image included in the stained image group. In the second display mode, a second display image group is displayed in order on the screen, the second display image group including two or more overlay images that are obtained for one visual field among the plurality of visual fields, the two or more overlay images each being obtained by overlaying the cell detection image and one of two or more stained images included in the stained image group.

According to the present invention, it is possible to facilitate verification of the result of detecting cell regions.

Aspect 2 of the present invention is the image display method according to Aspect 1, in which the operation c) includes d) setting the display mode of the screen to the first display mode to display the first display image group on the screen, e) selecting one image from the first display image group displayed in the operation d), and f) switching the display mode of the screen from the first display mode to the second display mode to display the second display image group on the screen by using a visual field that corresponds to the one image selected in the operation e) as the one visual field in the second display mode.

Aspect 3 of the present invention is the image display method according to Aspect 2, in which in the operation f), the two or more overlay images included in the second display image group are displayed with a display scaling factor equivalent to a display scaling factor of the one image selected in the operation e) and in a display range equivalent to a display range of the one image on the sample.

Aspect 4 of the present invention is the image display method according to any one of Aspects 1 to 3, in which in the second display mode, display scaling factors of the two or more overlay images included in the second display image group are changeable in synchronization with each other.

Aspect 5 of the present invention is the image display method according to any one of Aspects 1 to 3 (or according to any one of Aspects 1 to 4), in which in the second display mode, display ranges of the two or more overlay images included in the second display image group on the sample are changeable in synchronization with each other.

Aspect 6 of the present invention is the image display method according to any one of Aspects 1 to 3 (or according to any one of Aspects 1 to 5), in which in the second display mode, position indicators are displayed respectively in the two or more overlay images included in the second display image group, the position indicators each indicating a position in the image, the position indicators being movable in synchronization with each other.

Aspect 7 of the present invention is the image display method according to any one of Aspects 1 to 3 (or according to any one of Aspects 1 to 6), in which in the first display mode, display scaling factors of the two or more overlay images included in the first display image group are changeable in synchronization with each other.

Aspect 8 of the present invention is the image display method according to any one of Aspects 1 to 3 (or according to any one of Aspects 1 to 7), in which in the first display mode, processing for switching the one stained image that is overlaid with the cell detection image to another stained image included in the stained image group is performed for the two or more visual fields in synchronization with each other.

Aspect 9 of the present invention is the image display method according to any one of Aspects 1 to 3 (or according to any one of Aspects 1 to 8), in which the detection method in the operation b) is a detection method using a trained model produced by machine learning.

Aspect 10 of the present invention is the image display method according to any one of Aspects 1 to 3 (or according to any one of Aspects 1 to 9), in which another cell detection image is prepared for each of the plurality of visual fields, the another cell detection image indicating a cell region detected from the stained image group by a different detection method. In the operation c), the display mode of the screen is switchable among the first display mode, the second display mode, and a third display mode. In the third display mode, a third display image group is displayed in order on the screen, the third display image group including one overlay image and another overlay image that are obtained for one visual field among the plurality of visual fields, the one overlay image being obtained by overlaying the cell detection image and one stained image included in the stained image group, the another overlay image being obtained by overlaying the another cell detection image and the one stained image.

Aspect 11 of the present invention is the image display method according to Aspect 10, in which in the third display mode, display scaling factors of the one overlay image and the another overlay image are changeable in synchronization with each other.

Aspect 12 of the present invention is the image display method according to Aspect 10 (or according to Aspect 10 or 11), in which in the third display mode, display ranges of the one overlay image and the another overlay image on the sample are changeable in synchronization with each other.

Aspect 13 of the present invention is the image display method according to Aspect 10 (or according to any one of Aspects 10 to 12), in which in the third display mode, position indicators are displayed respectively in the one overlay image and the another overlay image, the position indicators each indicating a position in the image, the positions indicators being movable in synchronization with each other.

Aspect 14 of the present invention is an image display device that displays a result of detecting a cell region from a stained image obtained by immunostaining. The image display device includes a display that displays an image, a storage that stores a stained image group and a cell detection image for each of a plurality of visual fields, the stained image group including a plurality of types of stained images of a sample obtained by immunostaining, the cell detection image indicating a cell region detected from the stained image group by a predetermined detection method, and a display controller that overlays and displays the stained image group and the cell detection image on a screen of the display. The screen has a display mode that is switchable under control of the display controller between a first display mode and a second display mode. In the first display mode, a first display image group is displayed in order on the screen, the first display image group including two or more overlay images that are obtained respectively for two or more visual fields among the plurality of visual fields, the two or more overlay images each being obtained by overlaying the cell detection image and one stained image included in the stained image group. In the second display mode, a second display image group is displayed in order on the screen, the second display image group including two or more overlay images that are obtained for one visual field among the plurality of visual fields, the two or more overlay images each being obtained by overlaying the cell detection image and one of two or more stained images included in the stained image group.

Aspect 15 of the present invention is a program for displaying a result of detecting a cell region from a stained image obtained by immunostaining. The program is executed by a computer to a) for each of a plurality of visual fields on a sample, prepare a stained image group that includes a plurality of types of stained images obtained by immunostaining, b) for each of the plurality of visual fields, prepare a cell detection image that indicates a cell region detected from the stained image group by a predetermined detection method, and c) overlay and display the stained image group and the cell detection image on a screen. In the operation c), the screen has a display mode that is switchable between a first display mode and a second display mode. In the first display mode, a first display image group is displayed in order on the screen, the first display image group including two or more overlay images that are obtained respectively for two or more visual fields among the plurality of visual fields, the two or more overlay images each being obtained by overlaying the cell detection image and one stained image included in the stained image group. In the second display mode, a second display image group is displayed in order on the screen, the second display image group including two or more overlay images that are obtained for one visual field among the plurality of visual fields, the two or more overlay images each being obtained by overlaying the cell detection image and one of two or more stained images included in the stained image group.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a diagram showing a configuration of an image display device according to one embodiment.
Fig. 2 is a block diagram showing a functional configuration of the image display device.
Fig. 3 is a diagram showing a plurality of visual fields on a sample.
Fig. 4 is a diagram conceptually showing stained image groups and cell detection images.
Fig. 5 is a diagram showing a first stained image.
Fig. 6 is a diagram showing a second stained image.
Fig. 7 is a diagram showing a third stained image.
Fig. 8 is a diagram showing a fourth stained image.
Fig. 9 is a diagram showing a cell detection image.
Fig. 10 is a diagram showing a first overlay image.
Fig. 11 is a diagram showing a second overlay image.
Fig. 12 is a diagram showing a third overlay image.
Fig. 13 is a diagram showing an input/output overlay image.
Fig. 14 is a flowchart showing a procedure of image display.
Fig. 15 is a diagram showing an example of a screen in a first display mode.
Fig. 16 is a diagram showing another example of the screen in the first display mode.
Fig. 17 is a diagram showing yet another example of the screen in the first display mode.
Fig. 18 is a diagram showing yet another example of the screen in the first display mode.
Fig. 19 is a flowchart showing a procedure of switching the display mode.
Fig. 20 is a diagram showing an example of the screen in a second display mode.
Fig. 21 is a diagram showing another example of the screen in the second display mode.
Fig. 22 is a diagram showing yet another example of the screen in the second display mode.
Fig. 23 is a diagram showing an example of the screen in a third display mode.
Fig. 24 is a diagram showing another example of the screen in the third display mode.
Fig. 25 is a diagram showing yet another example of the screen in the third display mode.

### DESCRIPTION OF EMBODIMENTS

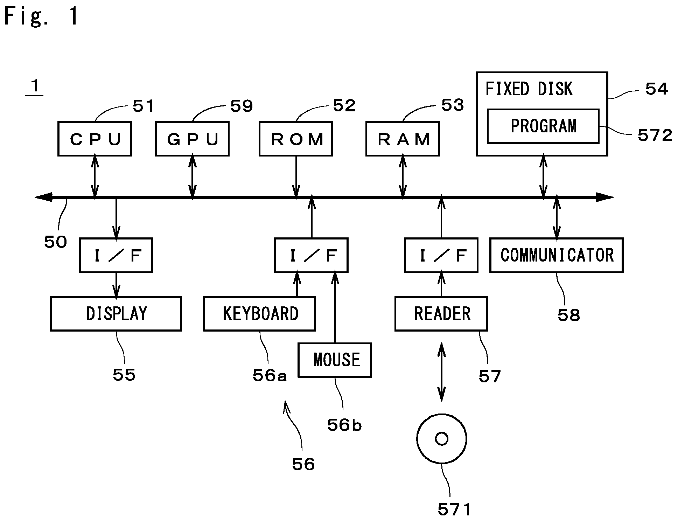

Fig. 1 is a diagram showing a configuration of a computer that functions as an image display device 1 according to one embodiment of the present invention. The image display device 1 is a device that displays the result of detecting cell regions from stained images of a tissue-derived sample that are obtained by immunostaining. For example, the image display device 1 may be used to verify the result of detecting cell regions.

Fig. 1 is a diagram showing a configuration of the computer functioning as the image display device 1. The computer has a configuration of a general computer system that includes a CPU 51, ROM 52, RAM 53, a fixed disk 54, a display 55, an input unit 56, a reader 57, a communicator 58, a GPU 59, and a bus 50. The CPU 51 performs a variety of arithmetic processing. The GPU 59 performs a variety of arithmetic processing relating to image processing. The ROM 52 stores basic programs. The RAM 53 stores a variety of information. The fixed disk 54 stores information. The display 55 is a display unit that display a variety of information such as images.

The input unit 56 includes a keyboard 56a and a mouse 56b that receive input from an operator. The reader 57 reads information from a computer-readable recording medium 571 such as an optical disk, a magnetic disk, a magneto-optical disk, or a memory card. The display 55, the keyboard 56a, the mouse 56b, and the reader 57 are connected to the bus 50 via interfaces I/F. The communicator 58 transmits and receives signals to and from devices or the like that are located outside the image display device 1. The bus 50 serves as a signal circuit that connects the CPU 51, the GPU 59, the ROM 52, the RAM 53, the fixed disk 54, the display 55, the input unit 56, the reader 57, and the communicator 58.

In the image display device 1, a program 572 is read via the reader 57 from the recording medium 571 and stored in the fixed disk 54 in advance. The program 572 may also be stored in the fixed disk 54 via a network. The CPU 51 and the GPU 59 perform arithmetic processing by using the RAM 53 or the fixed disk 54 in accordance with the program 572. The CPU 51 and the GPU 59 function as an arithmetic unit in the image display device 1. Any other configuration that functions as an arithmetic part may also be employed in addition to the CPU 51 and the GPU 59.

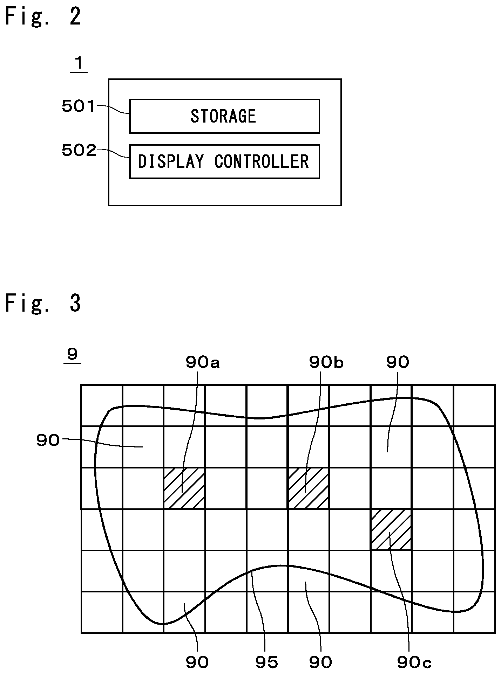

Fig. 2 is a block diagram showing a functional configuration of the image display device 1 that is realized by the aforementioned computer executing arithmetic processing or the like in accordance with the program 572. The functional configuration includes a storage 501 and a display controller 502. All or some of these functions may be realized by a dedicated electric circuit. These functions may also be realized by a plurality of computers. In the functional configuration shown in Fig. 2, the storage 501 is realized mainly by the RAM 53 and the fixed disk 54. The display controller 502 is realized by the CPU 51, the GPU 59, the ROM 52, the RAM 53, the fixed disk 54, and peripheral configurations of them.

The storage 501 stores a stained image group and a cell detection image in advance for each of a plurality of to-be-analyzed visual fields on a tissue-derived sample (hereinafter, also simply referred to as a "sample"). The " to-be-analyzed visual fields on the sample" (which are hereinafter also simply referred to as the "visual fields") refer to a plurality of segmented regions obtained by dividing a captured image in a matrix, the capture image being obtained by capturing an image of the sample that has been stained. Note that staining of the sample may be realized by any of various staining methods using antibodies, or may be realized by any of various staining methods that do not use antibodies.

The "stained image group" refers to a group of a plurality of types of stained images that correspond respectively to the plurality of visual fields described above. The plurality of types of stained images include a plurality of images obtained by staining one sample by a plurality of different types of staining methods. The plurality of types of stained images may include, for example, one or more types of the following images: an extracted image obtained by extracting part of the aforementioned captured image; a processed image obtained by performing predetermined processing on these extracted images; and a composite image obtained by combining two or more of the extracted images (e.g., images in which each pixel has a pixel value with minimum RGB values selected from among the two or more extracted images). The number of images included in the stained image group may be appropriately set within a range of two or more.

The "cell detection image" refers to one image corresponding to each of the visual fields described above and indicates a cell region detected from the stained image group corresponding to each visual field by a predetermined detection method.

Fig. 3 is a diagram showing a plurality of visual fields 90 that are set on a captured image obtained by capturing an image of a sample 9 of a tissue 95 (hereinafter, also simply referred to as the "sample 9"). In the example shown in Fig. 3, the visual fields 90 of an approximately square shape are arranged adjacent to one another in longitudinal and lateral directions in a matrix on the sample 9. In Fig. 3, three of the visual fields 90 are cross-hatched. In the following description, these three visual fields are also referred to as a "first visual field 90a," a "second visual field 90b," and a "third visual field 90c."

Although the following description is given on the assumption that the image display device 1 displays only images that relate to the first visual field 90a, the second visual field 90b, and the third visual field 90c, in actuality, the image display device 1 may display images that relate to all of the visual fields 90 on the sample 9 and use these images to verify the result of detecting cell regions. Note that the image display device 1 does not necessarily have to be capable of displaying images that relate to all of the visual fields 90 on the sample 9, and the number of visual fields 90 displayed by the image display device 1 may be appropriately set within a range of two or more.

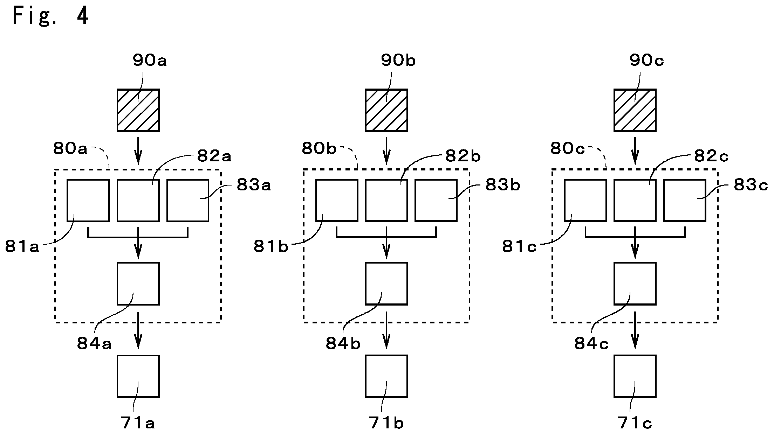

Fig. 4 is a diagram conceptually showing a stained image group 80a and a cell detection image 71a that correspond to the first visual field 90a, a stained image group 80b and a cell detection image 71b that correspond to the second visual field 90b, and a stained image group 80c and a cell detection image 71c that correspond to the third visual field 90c. In Fig. 4, the stained image groups 80a, 80b, and 80c are each enclosed by a dashed double-dotted line.

In the example shown in Fig. 4, the stained image group 80a corresponding to the first visual field 90a includes a first stained image 81a, a second stained image 82a, and a third stained image 83a. The first stained image 81a may, for example, be a single stained image obtained by extracting a region corresponding to the first visual field 90a from a captured image of the sample 9 stained by a first staining method. The first staining method may, for example, be a staining method using a CD20 antibody that detects a CD20 protein which is one protein classified by the CD classification system. The second stained image 82a may, for example, be a single stained image obtained by extracting a region corresponding to the first visual field 90a from a captured image of the sample 9 stained by a second staining method. The second staining method may, for example, be a staining method using a CD8 antibody that detects a CD8 protein. The third stained image 83a may, for example, be a single stained image obtained by extracting a region corresponding to the first visual field 90a from a captured image of the sample 9 stained by a third staining method. The third staining method may, for example, be a staining method using a CD3 antibody that detects a CD3 protein.

The stained image group 80a corresponding to the first visual field 90a further includes a fourth stained image 84a. The fourth stained image 84a is an image obtained by overlaying and combining the first, second, and third stained images 81a, 82a, and 83a. That is, the fourth stained image 84a indicates the proteins stained by the CD20 antibody, the CD8 antibody, and the CD3 antibody.

The stained image group 80b corresponding to the second visual field 90b includes a first stained image 81b, a second stained image 82b, a third stained image 83b, and a fourth stained image 84b. The first, second, and third stained images 81b, 82b, and 83b that correspond to the second visual field 90b are each a single stained image obtained by extracting a region corresponding to the second visual field 90b from a captured image of the sample 9 stained by one of the first to third staining methods described above. The fourth stained image 84b corresponding to the second visual field 90b is an image obtained by overlaying and combining the first, second, and third stained images 81b, 82b, and 83b that correspond to the second visual field 90b.

The stained image group 80c corresponding to the third visual field 90c includes a first stained image 81c, a second stained image 82c, a third stained image 83c, and a fourth stained image 84c. The first, second, and third stained images 81c, 82c, and 83c that correspond to the third visual field 90c are each a single stained image obtained by extracting a region corresponding to the third visual field 90c from a captured image of the sample 9 stained by one of the first to third staining methods described above. The fourth stained image 84c corresponding to the third visual field 90c is an image obtained by overlaying and combining the first, second, and third stained images 81c, 82c, and 83c that correspond to the third visual field 90c.

The first, second, and third stained images 81a, 82a, and 83a that are included in the stained image group 80a corresponding to the first visual field 90a may be acquired by, for example, sequentially subjecting one sample 9 to staining and image capture using the CD20 antibody, decolorization of the sample 9, staining and image capture using the CD8 antibody, decolorization of the sample 9, and staining and image capture using the CD3 antibody. Alternatively, the first, second, and third stained images 81a, 82a, and 83a included in the stained image group 80a corresponding to the first visual field 90a may be acquired by, for example, staining one sample 9 by collectively using the CD20, CD8, and CD3 antibodies and separating the colors of a multicolor image obtained by image capture into colors that correspond respectively to the aforementioned antibodies. The same also applies to the stained image group 80b corresponding to the second visual field 90b and the stained image group 80c corresponding to the third visual field 90c.

The cell detection image 71a is one image corresponding to the first visual field 90a and indicates cell regions detected from the stained image group 80a corresponding to the first visual field 90a by a predetermined detection method. The predetermined detection method may, for example, be a detection method using a trained model produced by machine learning. For example, the cell detection image 71a may be output as a result (i.e., an output image) of inputting, to the trained model, an input image included in the stained image group 80a corresponding to the first visual field 90a or an input image generated from an image included in the stained image group 80a. The input image may, for example, be the fourth stained image 84a included in the stained image group 80a.

The cell detection image 71a segments and displays cell regions that are detected from the aforementioned input image by the aforementioned trained model. That is, in the cell detection image 71a, the cell regions detected from the first, second, and third stained images 81a, 82a, and 83a by the aforementioned trained model are displayed without any distinction as to the stained image from which each cell region is detected. **In** the cell detection image 71a, for example, the detected cell regions may be filled in and displayed with a predetermined color.

The aforementioned trained model is produced by performing machine learning on an initial model for detecting cell regions, the machine learning using a data set for learning that is a group of stained images for learning. The machine learning may, for example, be deep learning using a neural network. For example, training by deep learning may be conducted using an U-Net. Note that the machine learning may be performed by a different method other than deep learning.

The cell detection image 71b is one image corresponding to the second visual field 90b and indicates cell regions detected from the stained image group 80b corresponding to the second visual field 90b by the same detection method as used to detect the cell detection image 71a (e.g., the detection method using the trained model produced by machine learning). The cell detection image 71c is one image corresponding to the third visual field 90c and indicates cell regions detected from the stained image group 80c corresponding to the third visual field 90c by the same detection method as used to detect the cell detection image 71a (e.g., the detection method using the trained model produced by machine learning).

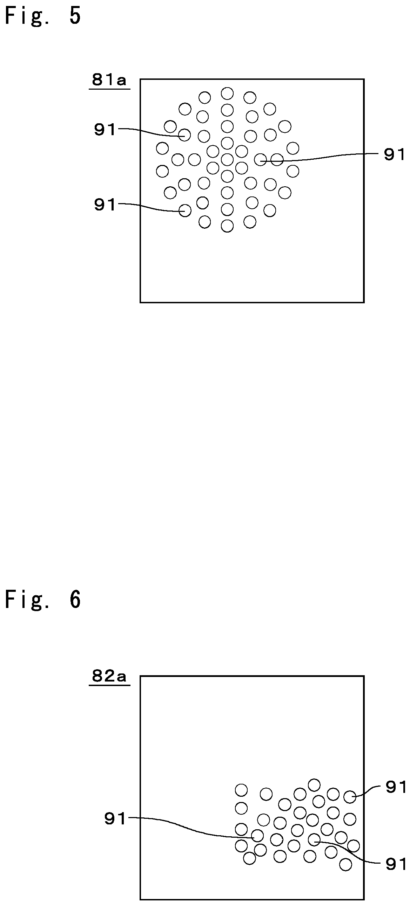

Figs. 5 to 8 are diagrams showing one examples of the first, second, third, and fourth stained images 81a, 82a, 83a, and 84a, respectively, that are included in the stained image group 80a corresponding to the first visual field 90a. In Figs. 5 to 8, the contours of stained cells 91 in the first, second, third, and fourth stained images 81a, 82a, 83a, and 84a are indicated by thin lines.

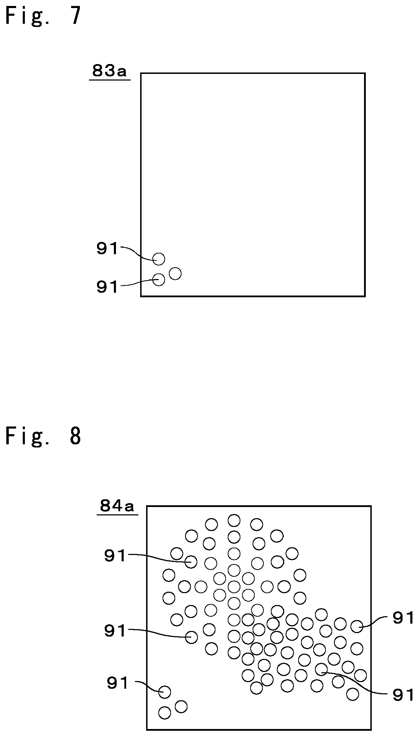

In the first stained image 81a shown in Fig. 5, a relatively large number of cells 91 disperse in an approximately circular shape and are located in the upper left portion of the image (i.e., the upper left portion of the first visual field 90a). In the second stained image 82a shown in Fig. 6, a relatively large number of cells 91 disperse in an approximately rectangular shape and are located in the lower right portion of the image (i.e., the lower right portion of the first visual field 90a). In the third stained image 83a shown in Fig. 7, three cells 91 are located in the vicinity of the lower left corner of the image (i.e., in the vicinity of the lower left corner of the first visual field 90a). The cells 91 in the third stained image 83a may, for example, be a type of cells that are small in number but important for analysis. The fourth stained image 84a shown in Fig. 8 shows the cells 91 displayed in the first, second, and third stained images 81a, 82a, and 83a shown in Figs. 5 to 7.

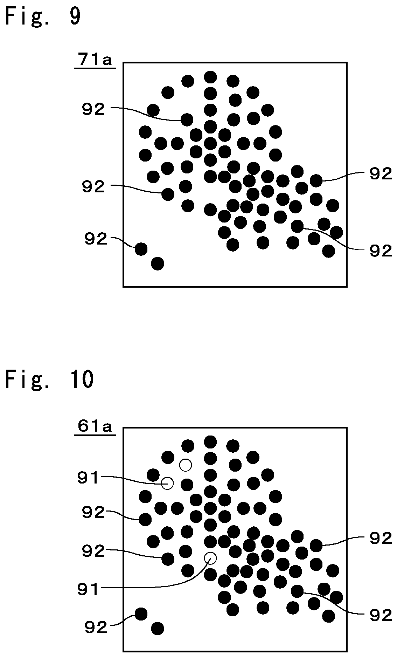

Fig. 9 is a diagram showing one example of the cell detection image 71a corresponding to the first visual field 90a. In Fig. 9, cell regions detected from the fourth stained image 84a (i.e., detected from the first, second, and third stained images 81a, 82a, and 83a) by the aforementioned detection method are filled in and displayed with black. Note that the cell regions 92 detected in the cell detection image 71a (hereinafter, also referred to as the "detected cell regions 92") do not necessarily have to be filled in and may be indicated by any other method such as highlighting the contours of the cell regions by thick lines.

In the actual cell detection image 71a, a color that indicates the detected cell regions 92 may preferably be set to a color different from the color indicating the cells 91 in the first, second, third, and fourth stained images 81a, 82a, 83a, and 84a and may more preferably be set to a color with high distinctiveness to the color indicating the cells 91. Specifically, it is preferable that the color indicating the detected cell regions 92 and the color indicating the cells 91 may be set so as to, for example, increase the distance therebetween in a uniform color space such as CIELAB.

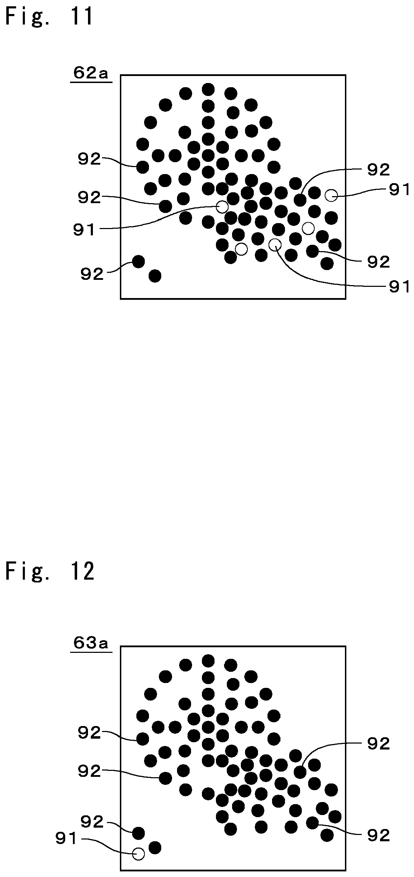

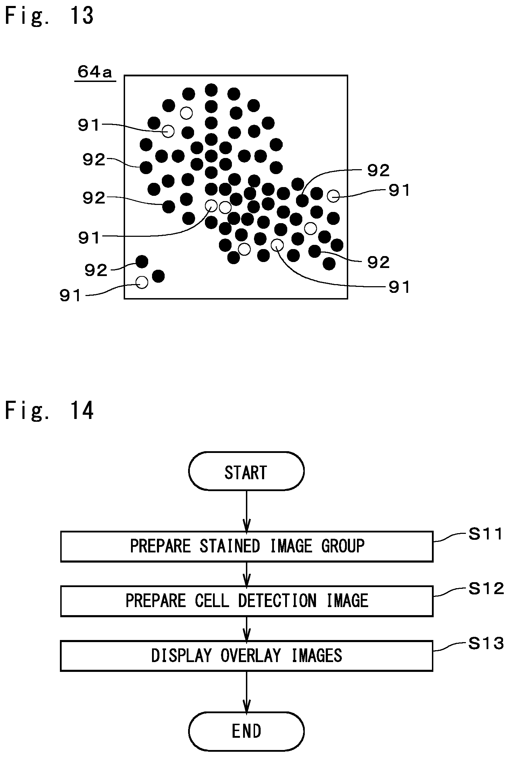

As will be described later, the image display device 1 displays overlay images relating to the first visual field 90a on the display (see Fig. 5), the overlay images being obtained by overlaying the cell detection image 71a with the first stained image 81a, the second stained image 82a, the third stained image 83a, and/or the fourth stained image 84a. Fig. 10 is a diagram showing a first overlay image 61a obtained by overlaying the first stained image 81a and the cell detection image 71a. Fig. 11 is a diagram showing a second overlay image 62a obtained by overlaying the second stained image 82a and the cell detection image 71a. Fig. 12 is a diagram showing a third overlay image 63a obtained by overlaying the third stained image 83a and the cell detection image 71a. Fig. 13 is a diagram showing an input/output overlay image 64a obtained by overlaying the fourth stained image 84a and the cell detection image 71a (i.e., overlaying the input and output images of the aforementioned trained model).

In the input/output overlay image 64a shown in Fig. 13, most of the cells 91 in the fourth stained image 84a overlap with the detected cell regions 92 and are filled in as the detected cell regions 92, so that the most of the cells 91 are visually unrecognizable. On the other hand, some of the cells 91 in the fourth stained image 84a do not overlap with the detected cell regions 92 (i.e., are not detected by the aforementioned trained model) and are visually recognizable as indicated by thin lines in Fig. 13. In the case where there are a relatively small number of visually recognizable cells 91 in the input/output overlay image 64a, the aforementioned trained model has high detection accuracy in detecting the stained cells 91 in the fourth stained image 84a (i.e., the input image). On the other hand, in the case where there are a relatively large number of visually recognizable cells 91 in the input/output overlay image 64a, the aforementioned trained mode does not have very high detection accuracy in detecting the stained cells 91 in the fourth stained image 84a.

In the detection of the cells 91 by using the aforementioned trained model, regions that are actually not the cells 91 may be detected as the cells 91 by mistake, and such mis-detected regions may be filled in as the detected cell regions 92 in the cell detection image 71a. The presence or absence of such over-detection may be checked by, for example, adjusting the cell detection image 71a to have high transmittancy in the input/output overlay image 64a before the operator observes the presence or absence of cells 91 that overlap with the detected cell regions 92. Alternatively, the input/output overlay image 64a and the fourth stained image 84a (see Fig. 8) may be displayed in parallel so that the operator is able to observe and compare both of the images and thereby check the presence or absence of the aforementioned over-detection.

In the first overlay image 61a shown in Fig. 10, most of the cells 91 in the first stained image 81a overlap with the detected cell regions 92 and are thus visually unrecognizable. On the other hand, some of the cells 91 in the first stained image 81a do not overlap with the detected cell regions 92 and are visually recognizable. In the case where there are a relatively small number of visually recognizable cells 91 in the first overlay image 61a, the aforementioned trained model has high detection accuracy in detecting the cells 91 stained by the CD20 antibody corresponding to the first stained image 81a. On the other hand, in the case where there are a relatively large number of visually recognizable cells 91 in the first overlay image 61a, the aforementioned trained model does not have very high detection accuracy in detecting the cells 91 stained by the CD20 antibody corresponding to the first stained image 81a. Note that the aforementioned check of over-detection in the first overlay image 61a may be implemented by, for example, adjusting the transmittancy of the cell detection image 71a in the first overlay image 61a or displaying the first overlay image 61a and the first stained image 81a in parallel in approximately the same manner as in the case of the input/output overlay image 64a.

In the second overlay image 62a shown in Fig. 11, most of the cells 91 in the second stained image 82a overlap with the detected cell regions 92 and are visually unrecognizable. On the other hand, some of the cells 91 in the second stained image 82a do not overlap with the detected cell regions 92 and are thus visually recognizable. In the case where there are a relatively small number of visually recognizable cells 91 in the second overlay image 62a, the aforementioned trained model has high detection accuracy in detecting the cells 91 stained by the CD8 antibody corresponding to the second stained image 82a. On the other hand, in the case where there are a relatively large number of visually recognizable cells 91 in the second overlay image 62a, the aforementioned trained model does not have very high detection accuracy in detecting the cells 91 stained by the CD8 antibody corresponding to the second stained image 82a. Note that the aforementioned check of over-detection in the second overlay image 62a may be implemented by, for example, adjusting the transmittancy of the cell detection image 71a in the second overlay image 62a or displaying the second overlay image 62a and the second stained image 82a in parallel in approximately the same manner as in the case of the input/output overlay image 64a.

In the third overlay image 63a shown in Fig. 12, two of the three cells 91 in the third stained image 83a overlap with the detected cell regions 92 and are visually unrecognizable. On the other hand, the other one of the three cells 91 in the third stained image 83a does not overlap with any of the detected cell regions 92 and is thus visually recognizable. In the case where there are a relatively small number of visually recognizable cells 91 in the third overlay image 63a, the aforementioned trained model has high detection accuracy in detecting the cells 91 stained by the CD3 antibody corresponding to the third stained image 83a. On the other hand, in the case where there are a relatively large number of visually recognizable cells 91 in the third overlay image 63a, the aforementioned trained model does not have very high detection accuracy in detecting the cells 91 stained by the CD3 antibody corresponding to the third stained image 83a. Note that the aforementioned check of over-detection in the third overlay image 63a may be implemented by, for example, adjusting the transmittancy of the cell detection image 71a in the third overlay image 63a or displaying the third overlay image 63a and the third stained image 83a in parallel in approximately the same manner as in the case of the input/output overlay image 64a.

The first, second, third, and fourth stained images 81b, 82b, 83b, and 84b and the cell detection image 71b that correspond to the second visual field 90b, and the first, second, third, and fourth stained images 81c, 82c, 83c, and 84c and the cell detection image 71c that correspond to the third visual field 90c are approximately the same images as those described in the examples shown in Figs. 5 to 9, except that the cells 91 and the detected cell regions 92 are arranged in different ways.

The image display device 1 is also capable of displaying overlay images that relate to the second visual field 90b and overlay images that relate to the third visual field 90c on the display 55 in the same manner as in the case of the aforementioned overlay images relating to the first visual field 90a (i.e., the first, second, and third overlay images 61a, 62a, and 63a and the input/output overlay image 64a) shown in Figs. 10 to 13.

Next, one example of the procedure for displaying images in the image display device 1 is described with reference to Fig. 14. In the image display device 1, firstly, the stained image groups 80a, 80b, and 80c (see Fig. 4) that correspond respectively to the first, second, and third visual fields 90a, 90b, and 90c on the sample 9 are prepared in such a manner that these stained image groups are input to the image display device 1 via the communicator 58 or the reading device 57 and are then stored in the storage 501 (see Fig. 2) (step S11). The cell detection images 71a, 71b, and 71c (see Fig. 4) that correspond respectively to the first, second, and third visual fields 90a, 90b, and 90c are also prepared in such a manner that these cell detection images are input to the image display device 1 via the communicator 58 or the reading device 57 and are then stored in the storage 501 (step S12).

Then, under the control of the display controller 502 (see Fig. 2), overlay images are generated by overlaying images included in the stained image groups 80a, 80b, and 80c and the cell detection images 71a, 71b, and 71c and then displayed on the screen of the display 55 (step S13). In step S13, these images are displayed in any of various display modes, and the display mode is switchable among a plurality of display modes.

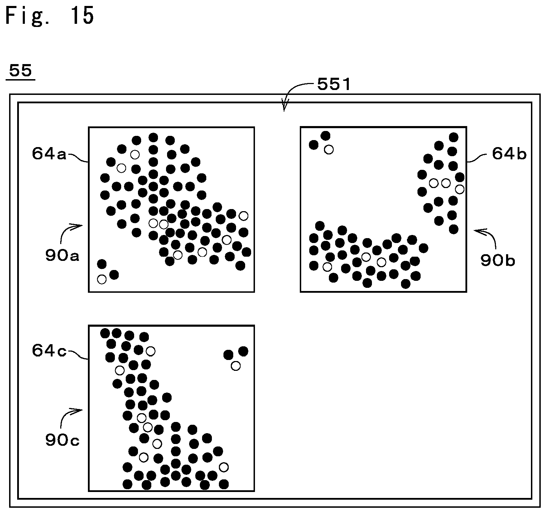

Fig. 15 is a diagram showing one example of a screen 551 of the display 55 that displays images in a first display mode. In the example shown in Fig. 15, the input/output overlay images 64a, 64b, and 64c that correspond respectively to the first, second, and third visual fields 90a, 90b, and 90c are displayed in order (i.e., in tiles) as a first display image group on the screen 551 without overlapping. Thus, by observing the first display image group displayed on the screen 551, the operator can check whether a certain percentage or more of target cells 91 have been detected by the aforementioned trained model (i.e., a numerical check of detection accuracy) for a plurality of visual fields on the sample 9 at the same time. As a result, it is possible to readily and speedily conduct a numerical check of the detection accuracy of the trained model.

In the image display device 1, display scaling factors of a plurality of images included in the first display image group in the first display mode (in the above-described example, the input/output overlay images 64a, 64b, and 64c that correspond respectively to the first, second, and third visual fields 90a, 90b, and 90c) may preferably be switchable in synchronization with one another.

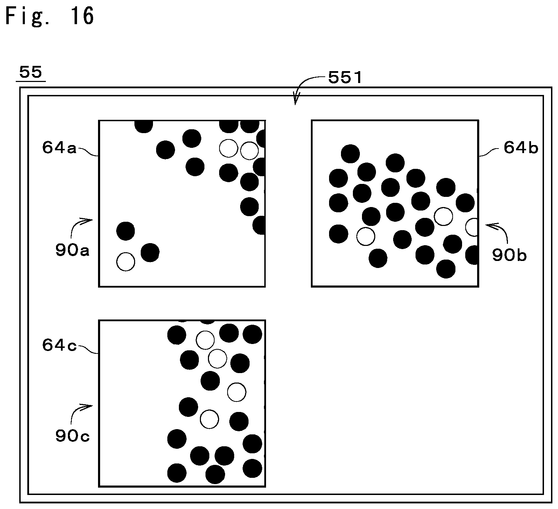

For example, when the operator has changed the display scaling factor of one of the images included in the first display image group (e.g., the input/output overlay image 64a corresponding to the first visual field 90a) by locating a mouse pointer which is not shown on the one image and operating the mouse wheel or the like, the display scaling factors of images other than the one image on the screen 551 (e.g., the input/output overlay images 64b and 64c that correspond respectively to the second and third visual fields 90b and 90c) are also changed to become the same as the display scaling factor of the one image as shown in Fig. 16. If the display scaling factors of the above-described images included in the first display image group are increased to become larger than the initial values, only part of the regions of the first, second, and third visual fields 90a, 90b, and 90c are displayed in each of the images.

Accordingly, in the case of observing an image other than the aforementioned one image (e.g., the input/output overlay image 64a) included in the first display image group, the operator can conduct an observation by using the display scaling factor that has been selected during observation of the one image, without again adjusting the display scaling factor. As a result, it is possible to readily make approximately constant the quality of observation of the images included in the first display image group.

In the first display mode, instead of or in addition to the input/output overlay images 64a to 64c corresponding to the first to third visual fields 90a to 90c, first overlay images that are obtained by overlaying the first stained images 81a to 81c and the cell detection images 71 a to 71c, second overlay images that are obtained by overlaying the second stained images 82a to 82c and the cell detection images 71a to 71c, and/or third overlay images obtained by overlaying the third stained images 83a to 83c and the cell detection images 71a to 71c may be displayed on the screen 551. That is, in the first display mode, the first display image group is displayed in order on the screen 551, the first display image group including two or more overlay images that correspond respectively to two or more visual fields. The number of images displayed on the screen 551 in the first display mode may be changed appropriately.

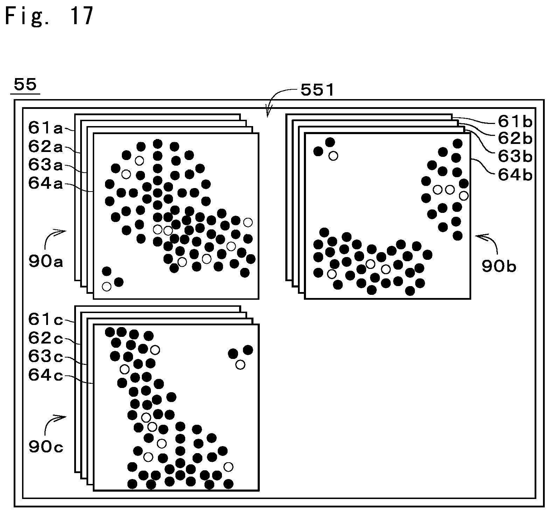

In the first display mode, the first, second, and third overlay images 61a, 62a, and 63a and the input/output overlay image 64a that correspond to the first visual field 90a may be displayed in stacks as shown in Fig. 17. This stack display refers to a display method of displaying a plurality of images in layers, in which an image displayed in the uppermost layer is visually recognizable as a whole and the other images are visually recognizable only in part. **In** the example shown in Fig. 17, the input/output overlay image 64a is located in the uppermost layer, so that the whole of the input/output overlay image 64a is visually recognizable.

For example, the operator can move another overlay image that is located in one of the lower layers of the input/output overlay image 64a to the uppermost layer so as to allow the other overlay image to be displayed as a whole, by moving the mouse pointer onto the other overlay image and selecting the other overlay image on the screen 551 with, for example, a click of a mouse button of the mouse 56b (see Fig. 1). **In** this way, changing the overlay image that is displayed in the uppermost layer among the above-described overlay images displayed in stacks (e.g., the first, second, and third overlay images 61a, 62a, and 63a and the input/output overlay image 64a) is equivalent to switching one stained image displayed overlapping with the cell detection image 71a to another stained image included in the stained image group 80a.

Moving an overlay image located in one of the lower layers among a plurality of overlay images displayed in stacks to the uppermost layer may be realized by any of other various methods. For example, a configuration is possible in which a list of a plurality of overlay images displayed in stacks is displayed separately, and one overlay image may be selected from the list so that the one overlay image is moved to the uppermost layer in the above-described stack display. Alternatively, the screen 551 may have a button (e.g., a "NEXT" button or a "FORWARD" button) for switching an overlay image that is located in the uppermost layer one by one in order among a plurality of overlay images displayed in stacks, and the desired overlay image may be moved to the uppermost layer with a click of this button. Instead of the aforementioned button for switching overlay images, a shortcut key for switching overlay images may be provided.

In the example shown in Fig. 17, the first, second, and third overlay images 61b, 62b, and 63b and the input/output overlay image 64b that correspond to the second visual field 90b, and the first, second, and third overlay images 61c, 62c, and 63c and the input/output overlay image 64c that correspond to the third visual field 90c are also displayed in stacks in the same manner as in the case of the first, second, and third overlay images 61a, 62a, and 63a and the input/output overlay image 64a that correspond to the first visual field 90a.

In the first display mode, when the operator has selected one overlay image located in one lower layer from among overlay images that are displayed in stacks and correspond to one of the first, second, and third visual fields 90a, 90b, and 90c, the selected overlay image is moved to the uppermost layer. For the other overlay images displayed in stacks for any visual field other than the one visual field, overlay images that correspond to the aforementioned selected overlay image are also moved to the uppermost layer in synchronization with one another. Specifically, for example, when the third overlay image 63a corresponding to the first visual field 90a has been selected and moved to the uppermost layer, the third overlay image 63b corresponding to the second visual field 90b and the third overlay image 63c corresponding to the third visual field 90c are also moved to the uppermost layer in synchronization with one another.

This enables the operator to speedily conduct the next observation when the operator who has observed one type of overlay images (e.g., the input/output overlay images 64a to 64c) corresponding to the first to third visual fields 90a to 90c next attempts to observe another type of overlay images (e.g., the third overlay images 63a to 63c) on the basis of, for example, the result of observation.

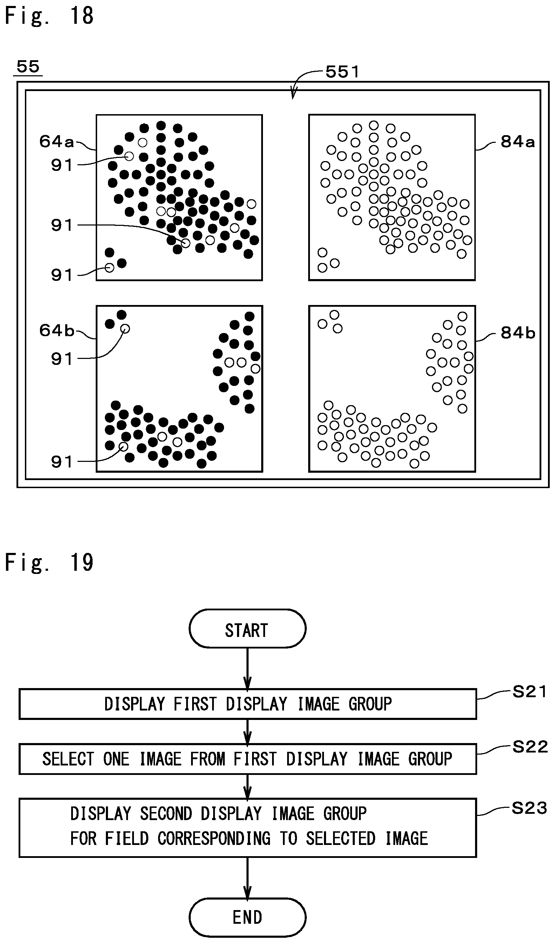

In the first display mode, the stained image included in the stained image group or the cell detection image may also be displayed in addition to the aforementioned overlay images. In the example shown in Fig. 18, the fourth stained image 84a corresponding to the first visual field 90a is displayed without overlapping on the right side of the input/output overlay image 64a corresponding to the first visual field 90a. Moreover, the fourth stained image 84b corresponding to the second visual field 90b is displayed without overlapping on the right side of the input/output overlay image 64b corresponding to the second visual field 90b. Thus, for the first and second visual fields 90a and 90b, the operator can observe in parallel the fourth stained images 84a and 84b and the input/output overlay images 64a and 64b obtained by overlaying the detected cell regions 92 on the fourth stained images 84a and 84b. As a result, consideration is readily given to, for example, the arrangement or features of cells 91 that have not been detected by the trained model. Besides, it becomes easy to check whether the detected regions (i.e., the detected cell regions 92) are really the cells 91 to be detected (i.e., the aforementioned presence or absence of over-detection).

**In** the example shown in Fig. 18, the first, second, and third overlay images 61a, 62a, and 63a may be displayed in stacks on the underside of the input/output overlay image 64a corresponding to the first visual field 90a, and the first, second, and third stained images 81a, 82a, and 83a may be displayed in stacks on the underside of the fourth stained image 84a. The same also applies to the input/output overlay image 64b and the fourth stained image 84b that correspond to the second visual field 90b.

In the example shown in Fig. 18, with a click of a page switching button (not shown) on the screen 551, display is switched from the aforementioned first display image groups corresponding to the first and second visual fields 90a and 90b to the first display image group corresponding to the third visual field 90c. In the first display image group corresponding to the third visual field 90c, the fourth stained image 84c corresponding to the third visual field 90c is displayed on the right side of the input/output overlay image 64c corresponding to the third visual field 90c without overlapping.

The image display device 1 can switch the display mode of the screen 551 between the aforementioned first display mode and a second display mode described below under the control of the display controller 502 (see Fig. 2).

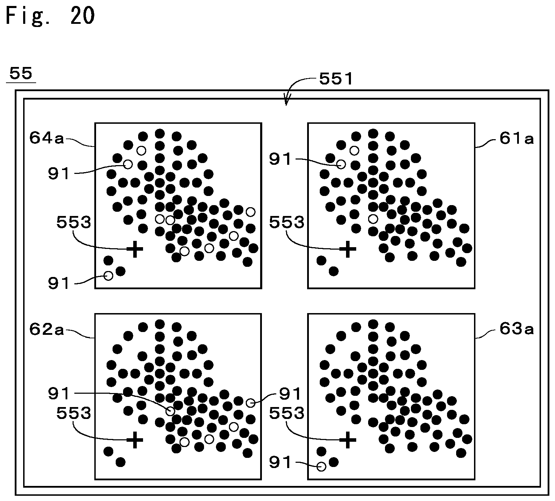

Fig. 19 is a diagram showing one example of the procedure for switching the display mode performed in step S13 described above. For example, the image display device 1 may set the display mode of the screen 551 to the first display mode to display the first display image group on the screen 551 as shown in Fig. 17 (step S21). Then, the operator moves the mouse pointer which is not shown onto the input/output overlay image 64a on the screen 551 in the first display mode shown in Fig. 17 and selects the input/output overlay image 64a with, for example, a click of the mouse button of the mouse 56b (see Fig. 1) (step S22). Thereafter, the operator clicks a display-mode switching button (not shown) on the screen 551. In this way, as shown in Fig. 20, the display mode of the screen 551 is switched to the second display mode in which a plurality of overlay images corresponding to the first visual field 90a which is the visual field corresponding to the input/output overlay image 64a (i.e., the visual field corresponding to one image selected in step S22) are displayed as the second display image group (step S23).

Fig. 20 is a diagram showing one example of the screen 551 of the display 55 that displays images in the second display mode. In the example shown in Fig. 20, the input/output overlay image 64a and the first, second, and third overlay images 61a, 62a, and 63a that correspond to the first visual field 90a are displayed in order as the second display image group on the screen 551 without overlapping.

Thus, by observing the second display image group displayed on the screen 551, the operator can check whether cells 91 that have not been detected by the aforementioned trained model are those that are included in any of the stained images in parallel for the first, second, and third stained images 81a, 82a, and 83a. As a result, in the detection using the trained model, the operator can readily and speedily check, for types of cells 91 that are small in number but important for analysis (i.e., cells 91 included in the third stained image 83a), whether there are any cells that have not be detected. In other words, the operator can readily and speedily make a qualitative check of the detection accuracy of the trained model by observing the second display image group displayed on the screen 551.

In the image display device 1, when the display on the screen 551 is switched from the first display mode to the second display mode in step S23 described above, the display scaling factor of one image selected in the first display mode (in the above-described example, the input/output overlay image 64a corresponding to the first visual field 90a) and the display range of the one image on the sample 9 are temporarily stored in the aforementioned storage 501 (see Fig. 2). Then, when the display mode of the screen 551 is set to the second display mode to display the second display image group, the display scaling factors of overlay images included in the second display image group (i.e., the input/output overlay image 64a and the first, second, and third overlay images 61a, 62a, and 63a that correspond to the first visual field 90a) and the display ranges of these overlay images on the sample 9 are made the same as the aforementioned display scaling factor and the aforementioned display range on the sample 9 that are temporarily stored in the storage 501.

This enables the operator to observe a region of the first visual field 90a that has been focused on in the first display mode with the desired display scaling factor immediately after switching to the second display mode without the need to again search for this region in the second display mode and to again adjust the display scaling factor of this region.

In the image display device 1, it is preferable that the display scaling factors of a plurality of images included in the second display image group displayed in the second display mode (in the above-described example, the input/output overlay image 64a and the first, second, and third overlay images 61a, 62a, and 63a that correspond to the first visual field 90a) may be changeable in synchronization with one another.

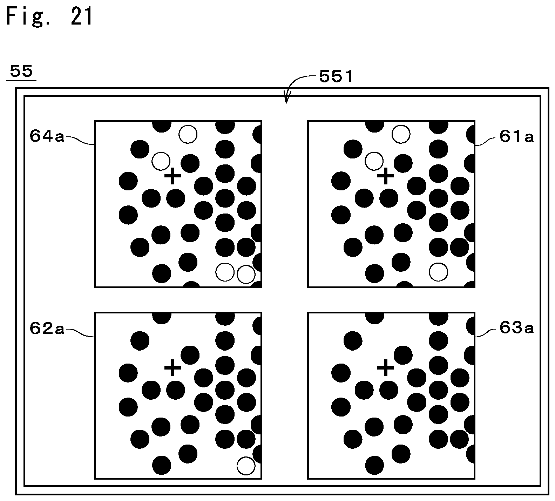

For example, when the operator has changed the display scaling factor of one image (e.g., the input/output overlay image 64a) among the images included in the second display image group by locating the mouse pointer which is not shown on the one image and operating the mouse wheel or the like, the display scaling factors of the images other than the one image on the screen 551 (e.g., the first, second, and third overlay images 61a, 62a, and 63a) are also changed to become the same as the display scaling factor of the one image as shown in Fig. 21. When the display scaling factor of the above-described images included in the second display image group is made larger than the initial display scaling factor, only part of the region of the first visual field 90a is displayed in each of the images.

This enables the operator to immediately observe a region of the first visual field 90a that has been focused on in one image included in the second display image group (e.g., the input/output overlay image 64a) with the desired display scaling factor without the need to again adjust the display scaling factor of this region in the other images.

In the image display device 1, it is also preferable that the display ranges of a plurality of images (in the above-described example, the input/output overlay image 64a and the first, second, and third overlay images 61a, 62a, and 63a that correspond to the first visual field 90a) included in the second display image group on the sample 9 in the second display mode are changeable in synchronization with one another.

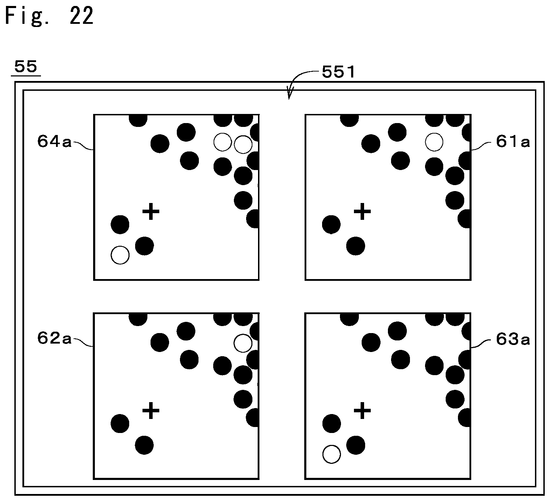

For example, in a state in which the display scaling factor of the images included in the second display image group is increased to become larger than the initial display scaling factor and only part of the first visual field 90a is displayed as described above, the operator changes the display range of one image (e.g., the input/output overlay image 64a) among the images on the sample 9 by locating the mouse pointer onto the one image and operating the mouse button or the like (i.e., changes the position of the display range of the one image within the first visual field 90a). Along with this, as shown in Fig. 22, the display ranges of the images other than the one image (e.g., the first, second, and third overlay images 61a, 62a, and 63a) on the screen 551 are also changed to become the same as the display range of the one image.

This enables the operator to immediately observe a region of the first visual field 90a that has been focused on in one image (e.g., the input/output overlay image 64a) included in the second display image group without the need to search for this region in the other images.

In the image display device 1, a position indicator 553 that indicates a position in each image may be displayed in each of a plurality of images (in the above-described example, the input/output overlay image 64a and the first, second, and third overlay images 61a, 62a, and 63a that correspond to the first visual field 90a) included in the second display image group displayed in the second display mode as shown in Fig. 20. The position indicator 553 may, for example, be a cross mark or a rectangular frame that can be displaced by the mouse 56b or the like. It is preferable that a plurality of position indicators 553 displayed respectively in the above-described plurality of images included in the second display image group are movable in synchronization with one another along with, for example, the movement of the mouse 56b. This enables the operator to readily see approximately the same positions indicated by the position indicators 553 in the images included in the second display image group.

In the second display mode, instead of or in addition to the input/output overlay image 64a and the first, second, and third overlay images 61a, 62a, and 63a that correspond to the first visual field 90a, the input/output overlay image 64b and the first, second, and third overlay images 61b, 62b, and 63b that correspond to the second visual field 90b, and/or the input/output overlay image 64c and the first, second, and third overlay images 61c, 62c, and 63c that correspond to the third visual field 90c may be displayed on the screen 551. That is, in the second display mode, the second display image group is displayed in order on the screen 551, the second display image group including two or more overlay images that correspond to one visual field. The number of images displayed on the screen 551 in the second display mode may be changed appropriately.

When the display mode of the screen 551 is switched from the second display mode to the first display mode, for example, the operator may move the mouse pointer which is not shown onto the input/output overlay image 64a on the screen 551 in the second display mode shown in Fig. 20, selects the input/output overlay image 64a with, for example, a click of the mouse button of the mouse 56b (see Fig. 1), and then clicks the display-mode switching button (not shown) on the screen 551. Accordingly, as shown in Fig. 15 or 17, the display mode of the screen 551 is switched to the first display mode in which the input/output overlay images 64a, 64b, and 64c that correspond respectively to the first, second, and third visual fields 90a, 90b, and 90c are displayed in parallel.

When the operator has selected the first overlay image 61a shown in Fig. 20 at the time of switching from the second display mode to the first display mode, the first overlay images 61a, 61b, and 61c that correspond respectively to the first, second, and third visual fields 90a, 90b, and 90c are displayed in order on the screen 551 in the first display mode in approximately the same manner as in the case of the input/output overlay images 64a, 64b, and 64c shown in Fig. 15 or 17.

When the operator has selected the second overlay image 62a, in the first display mode, the second overlay images 62a, 62b, and 62c that correspond respectively to the first, second, and third visual fields 90a, 90b, and 90c are displayed in order on the screen 551 in approximately the same manner as in the case of the input/output overlay images 64a, 64b, and 64c shown in Fig. 15 or 17. When the operator has selected the third overlay image 63a, in the first display mode, the third overlay images 63a, 63b, and 63c that correspond respectively to the first, second, and third visual fields 90a, 90b, and 90c are displayed in order on the screen 551 in approximately the same manner as in the case of the input/output overlay images 64a, 64b, and 64c shown in Fig. 15 or 17.

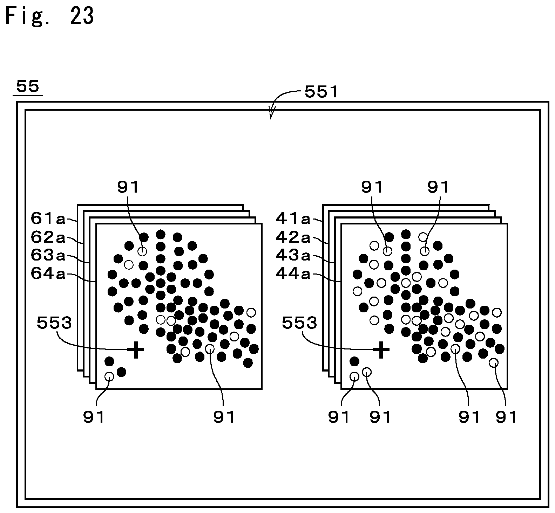

In the above-described example, the image display device 1 is used to verity the result of detecting cell regions obtained by one trained model, the present invention is not limited thereto. For example, the image display device 1 may be used to compare the results of detecting cell regions obtained by a plurality of trained models. For the comparison of a plurality of trained models, the display mode of the screen 551 in step S13 is switched to a third display mode shown in Fig. 23. This switching from the first or second display mode to the third display mode may be implemented by, for example, the operator clicking the display-mode switching button (not shown) displayed on the screen 551. Approximately the same applies also to switching from the third display mode to the first or second display mode.

Hereinafter, a case is described in which the previously-described trained model is compared with a trained model different in type. In the following description, the former trained model is also referred to as the "first trained model," and the latter trained model is also referred to as the "second trained model." The second trained model is produced by, for example, performing machine learning such as deep learning on an initial model for detecting cell regions, the machine learning using a data set for learning that is a group of stained images for learning. For example, the first and second trained models may differ in the type of the initial model, the contents of the data set for learning, or the method of machine learning.

In the example shown in Fig. 23, the first, second, and third overlay images 61a, 62a, and 63a and the input/output overlay image 64a that relate to the first trained model are displayed in stacks on the left side of the screen 551 of the display 55. The uppermost layer in the stack display is the input/output overlay image 64a. The first, second, and third overlay images 61a, 62a, and 63a and the input/output overlay image 64a are obtained by overlapping the cell detection image 71a (see Fig. 9) respectively with the first, second, third, and fourth stained images 81a, 82a, 83a, and 84a (see Figs. 5 to 8) that correspond to the first visual field 90a, the cell detection image being produced by the first trained model and corresponding to the first visual field 90a (see Fig. 3).

A first overlay image 41a, a second overlay image 42a, a third overlay image 43a, and an input/output overlay image 44a that relate to the second trained model are displayed in stacks on the right side of the screen 551 of the display 55. The uppermost layer in the stack display is the input/output overlay image 44a. The first, second, and third overlay images 41a, 42a, and 43a and the input/output overlay image 44a are obtained by overlaying a cell detection image produced by the second trained model and corresponding to the first visual field 90a (see Fig. 3) respectively with the first, second, third, and fourth stained images 81a, 82a, 83a, and 84a (see Figs. 5 to 8) described above that correspond to the first visual field 90a.

In the third display mode shown in Fig. 23, the first, second, and third overlay images 61a, 62a, and 63a and the input/output overlay image 64a that relate to the first trained model and the first, second, and third overlay images 41a, 42a, and 43a and the input/output overlay image 44a that relate to the second trained model form the third display image group displayed on the screen 551. The input/output overlay image 64a and the input/output overlay image 44a that are located in the uppermost layer in each stack are displayed in order (i.e., in tiles) on the screen 551 without overlapping.

The operator can move another overlay image located in one of the lower layers of the input/output overlay image 64a to the uppermost layer so as to allow the other overlay image to be displayed as a whole by, for example, moving the mouse pointer onto the other overlay image and selecting the other overlay image with, for example, a click of the mouse button of the mouse 56b (see Fig. 1) on the screen 551. In this way, changing the overlay image that is displayed in the uppermost layer among the aforementioned overlay images displayed in stacks (e.g., the first, second, and third overlay images 61a, 62a, and 63a and the input/output overlay image 64a) is equivalent to switching one stained image that is overlaid and displayed with the cell detection image 71a to another stained image included in the stained image group 80a (see Fig. 4).

In the third display mode, when the operator has selected an overlay image that is located in one of the lower layers as described above from the overlay images displayed in stacks in relation to one trained model out of the first and second trained models, the selected overlay image is moved to the uppermost layer. Moreover, an overlay image that corresponds to the aforementioned selected overlay image among the overlay images displayed in stacks in relation to the trained model other than the one trained model is also moved to the uppermost layer in synchronization. Specifically, for example, when the third overlay image 63a relating to the first trained model is selected and moved to the uppermost layer, the third overlay image 43a relating to the second trained model is also moved to the uppermost layer in synchronization.

By observing the third display image group displayed on the screen 551, the operator can readily and speedily compare the result of detecting cells 91 obtained by the first trained model and the result of detecting cells 91 obtained by the second trained model. For example, by comparing the input/output overlay image 64a and the input/output overlay image 44a as shown in Fig. 23, the first and second trained models can be compared as to whether a certain percentage or more of cells 91 to be detected have been detected (i.e., numerical detection accuracy). Moreover, by comparing the third overlay image 63a (see Fig. 12) and the third overlay image 43a, the first and second trained models can also be compared as to whether, among types of cells that are small in number but important for analysis, there are any cells that have not been detected (i.e., quantitative detection accuracy).

Although in the example shown in Fig. 23, the overlay images corresponding to the first visual field 90a are displayed on the screen 551, in the third display mode, stained images corresponding to the first visual field 90a (e.g., the first, second, third, and fourth stained images 81a, 82a, 83a, and 84a in Figs. 5 to 8) may also be displayed in addition to the above overlay images on the screen 551. In the third display mode, overlay images that correspond to a different visual field other than the first visual field 90a may also be displayed on the screen 551 instead of or in addition to the overlay images corresponding to the first visual field 90a.

In the image display device 1, it is preferable that the display scaling factors of a plurality of images included in the third display image group displayed in the third display mode (e.g., the input/output overlay image 64a corresponding to the first trained model and the input/output overlay image 44a corresponding to the second trained model) may be changeable in synchronization with each other.

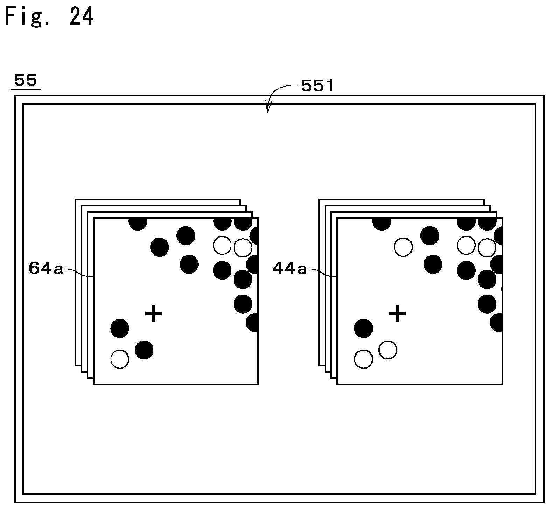

For example, when the operator has changed the display scaling factor of one image (e.g., the input/output overlay image 64a) among the images included in the third display image group by moving the mouse pointer onto the one image and operating the mouse wheel or the like, the display scaling factors of images (e.g., the input/output overlay image 44a) other than the one image on the screen 551 are also changed to become the same as the display scaling factor of the one image as shown in Fig. 24. If the display scaling factor of the above-described images included in the third display image group is made larger than the initial display scaling factor, only part of the region of the first visual field 90a is displayed in each of these images.

This enables the operator to immediately observe a region of the first visual field 90a that has been focused on in one image included in the third display image group (e.g., the input/output overlay image 64a) with the desired display scaling factor without the need to again adjust the display scaling factor of this region in the other images.

In the image display device 1, it is also preferable that the display ranges of a plurality of images included in the third display image group in the third display mode (e.g., the input/output overlay image 64a corresponding to the first trained model and the input/output overlay image 44a corresponding to the second trained model) on the sample 9 may be changeable in synchronization with one another.

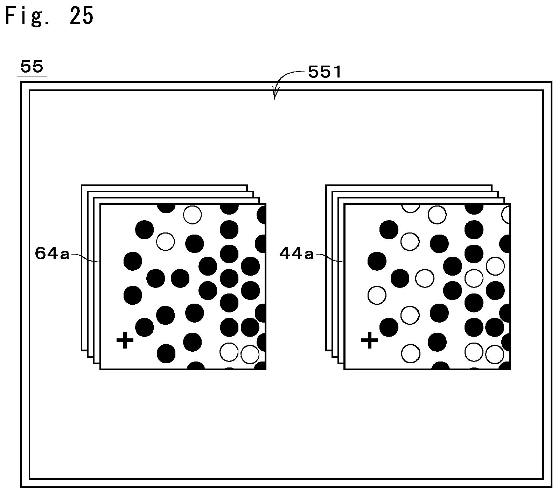

For example, as described above, in a state in which the display scaling factors of the images included in the third display image group are made larger than the initial display scaling factors so that only part of the first visual field 90a is displayed, the operator changes the display range of one image (e.g., the input/output overlay image 64a) among the images on the sample 9 by locating the mouse pointer onto the one image and operating the mouse button or the like (i.e., changing the position of the display range of the one image within the first visual field 90a). Along with this, the display ranges of images (e.g., the input/output overlay image 44a) other than the one image displayed on the screen 551 on the sample 9 are also changed to become the same as the display range of the one image as shown in Fig. 25.

This enables the operator to immediately observe a region of the first visual field 90a that has been focused on in the one image (e.g., the input/output overlay image 64a) included in the third display image group without the need to again search for this region in the other images.

In the image display device 1, as shown in Fig. 23, a position indicator 553 that indicates a position in the image may also be displayed in each of a plurality of images (e.g., the input/output overlay image 64a corresponding to the first trained model and the input/output overlay image 44a corresponding to the second trained model) included in the third display image group displayed in the third display mode. The position indicator 553 may, for example, be a cross mark or a rectangular frame that can be displaced by the mouse 56b or the like. The position indicators 553 displayed respectively in the above-described images included in the third display image group may preferably be movable in synchronization with one another along with the movement of the mouse 56b or the like. This enables the operator to readily focus on approximately the same positions indicated by the position indicators 553 in the images included in the third display image group.

As described above, the above-described image display method of displaying the result of detecting cell regions from stained images obtained by immunostaining includes the step of preparing the stained image groups 80a to 80c respectively for the visual fields 90a to 90c on the sample 9, the stained image groups 80a to 80c including the plurality of types of stained images 81a to 84a, 81b to 84b, and 81c to 84c of the sample 9 obtained by immunostaining (step S11); the step of preparing the cell detection images 71a to 71c respectively for the visual fields 90a to 90c, the cell detection images 71a to 71c indicating the cell regions 92 detected from the stained image groups 80a to 80c (i.e., the detected cell regions 92) by a predetermined detection method (step S12); and the step of overlaying and displaying the stained image groups 80a to 80c and the cell detection images 71a to 71c on the screen 551 (step S13).

The display mode of the screen 551 in step S13 is switchable between the first display mode and the second display mode. In the first display mode, the first display image group is displayed in order on the screen 551, the first display image group including two or more overlay images (e.g., the input/output overlay images 64a to 64c) that are obtained respectively for two or more visual fields among the visual fields 90a to 90c, the two or more overlay images each being obtained by overlaying the cell detection image (71a to 71c) and one stained image included in the stained image group (80a to 80c). In the second display mode, the second display image group is displayed in order on the screen 551, the second image display group including two or more overlay images (e.g., the first, second, and third overlay images 61a, 62a, and 63a and the input/output overlay image 64a) that are obtained for one visual field among the visual fields 90a to 90c, the two or more overlay images each being obtained by overlaying the cell detection image (71a to 71c) and one of two or more stained images included in the stained image group (80a to 80c). This enables the operator to readily verify the result of detecting cell regions 92 as described above.

Preferably, step S13 described above may include the step of setting the display mode of the screen 551 to the first display mode to display the first display image group on the screen 551 (step S21), the step of selecting one image (e.g., the input/output overlay image 64a) from the first display image group displayed in step S21 (step S22), and the step of switching the display mode of the screen 551 from the first display mode to the second display mode to display the second display image group (e.g., the first, second, and third overlay images 61a, 62a, and 63a and the input/output overlay image 64a) on the screen 551 by using a visual field that corresponds to the one image selected in step S22 as the aforementioned one visual field in the second display mode (step S23).

Accordingly, for one visual field focused on by the operator in the first display mode, a plurality of overlay images that correspond respectively to a plurality of types of staining methods can be displayed on the screen 551 by simple operation, and these overlay images can be observed at the same time. As a result, it is possible to further facilitate the verification of the results of detecting cell regions 92.

As described above, it is preferable in step S23 that the two or more overlay images (e.g., the first, second, and third overlay images 61a, 62a, and 63a and the input/output overlay image 64a) included in the second display image group may be displayed with a display scaling factor equivalent to the display scaling factor of the aforementioned one image selected in step S22 and in a display range equivalent to the display range of the one image on the sample 9.

In this way, the display scaling factors and display ranges of the overlay images are maintained when the display mode is switched. This enables the operator to observe a region focused on in the first display mode with the desired display scaling factor immediately after switching to the second display mode. As a result, it is possible to further facilitate the verification of the result of detecting cell regions 92.

In the aforementioned image display method, it is preferable that, in the second display mode, the display scaling factors of the two or more overlay images included in the second display image group may be changeable in synchronization with one another. This enables the operator to immediately observe a region that has been focused on in one image included in the second display image group with the desired display scaling factor without the need to again adjust the display scaling factor of this region in the other images. As a result, it is possible to further facilitate the verification of the result of detecting cell regions 92.

In the aforementioned image display method, it is preferable that, in the second display mode, the display ranges of the two or more overlay images included in the second display image group on the sample 9 may be changeable in synchronization with one another. This enables the operator to immediately observe a region that has been focused on in one image included in the second display image group without the need to again search for this region in the other images. As a result, it is possible to further facilitate the verification of the result of detecting cell regions 92.

In the aforementioned image display method, it is preferable that, in the second display mode, the position indicators 553 displayed respectively in the two or more overlay images included in the second display image group may be movable in synchronization with each other, the position indicators each indicating a position in the image. This enables the operator to readily focus on approximately the same positions indicated by the position indicators 553 in the two or more overlay images included in the second display image group. As a result, it is possible to further facilitate the verification of the result of detecting cell regions 92.

In the aforementioned image display method, it is preferable that, in the first display mode, the display scaling factors of the two or more overlay images included in the first display image group may be changeable in synchronization with one another. This enables the operator to observe the two or more overlay images with the desired display scaling factor without the need to individually adjust the display scaling factors of these overlap images. As a result, it is possible to further facilitate the verification of the result of detecting cell regions 92.

In the aforementioned image display method, it is preferable that, in the first display mode, the processing for switching one stained image (e.g., the fourth stained images 84a to 84c) that is overlaid with the cell detection image (71a to 71c) to another stained image (e.g., the third stained images 83a to 83c) included in the stained image groups (80a to 80c) may be performed for the aforementioned two or more visual fields in synchronization with one another.

This enables the operator to speedily conduct the next observation when the operator who has observed one type of overlay images (e.g., the input/output overlay images 64a to 64c) corresponding to the visual fields 90a to 90c next attempts to observe another type of overlay images (e.g., the third overlay images 63a to 63c) on the basis of, for example, the result of observation. As a result, it is possible to further facilitate the verification of the result of detecting cell regions 92.

As described above, the detection method in step S12 (i.e., the method of detecting the cell regions 92) may preferably be a detection method using a trained model produced by machine learning. This allows accurate detection of the cell regions 92 that vary in shape, size, arrangement, and staining mode.

In the aforementioned image display method, it is preferable that another cell detection image may be prepared for each of the visual fields 90a to 90c, the other cell detection image indicating a cell region detected from the stained image group (80a to 80c) by a different detection method. Then, the display mode of the screen 551 in step S13 may preferably be switchable among the first display mode, the second display mode, and the third display mode. In the third display mode, the third display image group is displayed in order on the screen 551, the third display image group including one overlay image (e.g., the input/output overlay image 64a) and another overlay image (e.g., the input/output overlay image 44a), the one overlay image being obtained by overlaying the cell detection image and one stained image included in the stained image group for one visual field among the visual fields 90a to 90c, the other overlay image being obtained by overlaying the other cell detection image and the one stained image for the one visual field. This enables the operator to readily compare the results of detecting cell regions 92 obtained by a plurality of detection methods.

In the aforementioned image display method, it is preferable that, in the third display mode, the display scaling factors of the one overlay image and the other overlay image described above (e.g., the input/output overlay image 64a and the input/output overlay image 44a) may be changeable in synchronization with each other. This enables the operator to immediately observe a region that has been focused on in one image included in the third display image group with the desired display scaling factor without the need to again adjust the display scaling factor of this image in the other images. As a result, it is possible to further facilitate the comparison of the results of detecting cell regions 92 obtained by a plurality of detection methods.

In the aforementioned image display method, it is preferable that, in the third display mode, the display ranges of the one overlay image and the other overlay image described above (e.g., the input/output overlay image 64a and the input/output overlay image 44a) on the sample 9 may be changeable in synchronization with each other. This enables the operator to speedily observe a region that has been focused on in one image included in the third display image group without the need to again search for this region in the other images. As a result, it is possible to further facilitate the comparison of the results of detecting cell regions 92 obtained by a plurality of detection methods.

In the aforementioned image display method, it is preferable that, in the third display mode, the position indicators 553 displayed respectively in the one overlay image and the other overlay image described above (e.g., the input/output overlay image 64 and the input/output overlay image 44a) may be movable in synchronization with each other, the position indicators each indicating a position in the image. This enables the operator to readily focus on approximately the same positions indicated by the position indicators 553 in the two or more overlay images included in the third display image group. As a result, it is possible to further facilitate the comparison of the results of detecting cell regions 92 obtained by a plurality of detection methods.

The above-described image display device 1 includes the display unit (i.e., display 55), the storage 501, and the display controller 502. The display 55 displays images. The storage 501 stores the stained image groups 80a to 80c and the cell detection images 71a to 71c for the visual fields 90a to 90c, the stained image groups 80a to 80c including the plurality of types of stained images 81a to 84a, 81b to 84b, and 81c to 84c of the sample 9 obtained by immunostaining, the cell detection images 71a to 71c indicating the cell regions 92 detected from the stained image groups 80a to 80c (i.e., the detected cell regions 92) for the visual fields 90a to 90c by a predetermined detection method. The display controller 502 overlays and displays the stained image groups 80a to 80c and the cell detection images 71a to 71c on the screen 551 of the display 55.

In the image display device 1, the display mode of the screen 551 is switchable between the first display mode and the second display mode under the control of the display controller 502. In the first display mode, the first display image group is displayed in order on the screen 551, the first display image group including two or more overlay images (e.g., the input/output overlay images 64a to 64c) that are obtained respectively for two or more visual fields among the visual fields 90a to 90c, the two or more overlay images each being obtained by overlaying the cell detection image (71a to 71c) and one stained image included in the stained image group (80a to 80c). In the second display mode, the second display image group is displayed in order on the screen 551, the second display image group including two or more overlay images (e.g., the first, second, and third overlay images 61a, 62a, and 63a and the input/output overlay image 64a) that are obtained for one visual field among the visual fields 90a to 90c, the two or more overlay images each being obtained by overlaying the cell detection image (71a to 71c) and one of two or more stained images included in the stained image group (80a to 80c). This enables the operator to readily verify the result of detecting cell regions 92 as described above.

As described above, the program 572 is executed by a computer to perform the step of, for the visual fields 90a to 90c on the sample 9, preparing the stained image groups 80a to 80c that respectively include the plurality of types of stained images 81a to 84a, 81b to 84b, and 81c to 84c of the sample 9 obtained by immunostaining (step S11); the step of, for the visual fields 90a to 90c, preparing the cell detection images 71a to 71c indicating the cell regions 92 detected from the stained image groups 80a to 80c (i.e., the detected cell regions 92) by a predetermined detection method (step S12); and the step of overlaying and displaying the stained image groups 80a to 80c and the cell detection images 71a to 71c on the screen 551 (step S13)..

The display mode of the screen 551 in step S13 is switchable between the first display mode and the second display mode. In the first display mode, the first display image group is displayed in order on the screen 551, the first display image group including two or more overlay images (e.g., the input/output overlay image 64 a to 64c) that are obtained respectively for two or more visual fields among the visual fields 90a to 90c, the two or more overlay images each being obtained by overlaying the cell detection image (71a to 71c) and one stained image included in the stained image group (80a to 80c). In the second display mode, the second display image group is displayed in order on the screen 551, the second display image group including two or more overlay images (e.g., the first, second, and third overlay images 61a, 62a, and 63a and the input/output overlay image 64a) that are obtained for one visual field among the visual fields 90a to 90c, the two or more overlay images each being obtained by overlaying the cell detection image (71a to 71c) and one of two or more stained images included in the stained image group (80a to 80c). This enables the operator to readily verify the result of detecting cell regions 92 as described above.

The image display method, the image display device 1, and the program 572 described above may be modified in various ways.

For example, in the first, second, and third display modes, the display scaling factors of a plurality of overlay images displayed on the screen 551 may be individually changed.

In the second and third display modes, the display ranges on the sample 9 of a plurality of overlay image displayed on the screen 551 may be individually changed. In the second and third display modes, the position indicators 553 shown in the overlay images displayed on the screen 551 may be moved individually. Note that the position indicators 553 may not be displayed.

In the first display mode, the processing for switching one stained image (e.g., the fourth stained image 84a to 84c) that is overlaid with the cell detection image (71a to 71c) to another stained image (e.g., the third stained images 83a to 83c) may be performed individually for the visual fields 90 a to 90c.

In the case where the display mode of the screen 551 is switched from the first display mode to the second display mode in step S23, the display scaling factors and display ranges of a plurality of overlay images included in the second display image group do not necessarily have to be the same as the display scaling factor and display range of one image included in the first display image group selected in step S22.

In the case where the display mode of the screen 551 is switched from the first display mode to the second display mode, it is not necessary to always select one image from the first display image group (i.e., select a visual field corresponding to the one image). Alternatively, a visual field different from the visual field displayed in the first display image group may be selected, and the second display image group corresponding to the selected visual field may be displayed on the screen 551.

In the case where no comparison is made among the results of detecting cell regions 92 obtained by a plurality of detection methods, the image display device 1 does not necessarily have to have a function of switching the display mode to the third display mode.

In the image display device 1, for example, the aforementioned trained model may be stored in the storage 501, and the image display device 1 may detect the cell regions 92 from the stained image groups 80a to 80c.

The aforementioned method of detecting cell regions 92 is not always limited to the detection method using a trained model produced by machine learning, and may be changed to any other detection method such as a rule-based detection method.

In the case where the image display device 1 uses a plurality of displays 55 arranged in longitudinal and/or lateral directions as one display unit, the aforementioned screen 551 may be a combination of the screens of the displays 55.

The image display method, the image display device 1, and the program 572 described above do not necessarily have to be used for the verification of the result of detecting cell regions, and may be used in various applications. The sample 9 does not necessarily have to be a tissue-derived sample, and may be any other sample.

The configurations of the above-described preferred embodiment and variations may be appropriately combined as long as there are no mutual inconsistencies.

While the invention has been shown and described in detail, the foregoing description is in all aspects illustrative and not restrictive.

### REFERENCE SIGNS LIST

- 1: image display device
- 9: sample
- 41a, 61a to 61c: first overlay image
- 42a, 62a to 62c: second overlay image
- 43a, 63a to 63c: third overlay image
- 44a, 64a to 64c: input/output overlay image
- 55: display
- 71a to 71c: cell detection image
- 80a to 80c: stained image group
- 81a to 81c: first stained image
- 82a to 82c: second stained image
- 83a to 83c: third stained image
- 84a to 84c: fourth stained image
- 90: visual field
- 90a: first visual field
- 90b: second visual field
- 90c: third visual field
- 91: cell
- 92: cell region
- 501: storage
- 502: display controller
- 551: screen
- 572: program
- S11 to S13, S21 to S23: step

## Claims

1. An image display method of displaying a result of detecting a cell region from a stained image obtained by immunostaining, the image display method comprising:
a) for each of a plurality of visual fields (90a-90c) on a sample (9), preparing (S11) a stained image group (80a-80c) that includes a plurality of types of stained images (81a-84a, 81b-84b, 81c-84c) of said sample (9) obtained by immunostaining;
b) for each of said plurality of visual fields (90a-90c), preparing (S12) a cell detection image (71a-71c) that indicates a cell region (92) detected from said stained image group (80a-80c) by a predetermined detection method; and
c) overlaying and displaying (S13) said stained image group (80a-80c) and said cell detection image (71a-71c) on a screen (551),
wherein in said operation c) (S13), said screen (551) has a display mode that is switchable between:
a first display mode in which a first display image group is displayed in order on said screen (551), said first display image group including two or more overlay images (64a-64c) that are obtained respectively for two or more visual fields among said plurality of visual fields (90a-90c), said two or more overlay images (64a-64c) each being obtained by overlaying said cell detection image (71a-71c) and one stained image included in said stained image group (80a-80c), and
a second display mode in which a second display image group is displayed in order on said screen (551), said second display image group including two or more overlay images (61a, 62a, 63a, 64a) that are obtained for one visual field among said plurality of visual fields (90a-90c), said two or more overlay images (61a, 62a, 63a, 64a) each being obtained by overlaying said cell detection image (71a-71c) and one of two or more stained images included in said stained image group (80a-80c).

2. The image display method according to claim 1, wherein
said operation c) (S13) includes:
d) setting (S21) the display mode of said screen (551) to said first display mode to display said first display image group on said screen (551);
e) selecting (S22) one image (64a) from said first display image group displayed in said operation d) (S21); and
f) switching (S23) the display mode of said screen (551) from said first display mode to said second display mode to display said second display image group on said screen (551) by using a visual field that corresponds to said one image (64a) selected in said operation e) (S22) as said one visual field (90a) in said second display mode.

3. The image display method according to claim 2, wherein
in said operation f) (S23), said two or more overlay images (61a, 62a, 63a, 64a) included in said second display image group are displayed with a display scaling factor equivalent to a display scaling factor of said one image (64a) selected in said operation e) (S22) and in a display range equivalent to a display range of said one image on said sample (9).

4. The image display method according to any one of claims 1 to 3, wherein
in said second display mode, display scaling factors of said two or more overlay images (61a, 62a, 63a, 64a) included in said second display image group are changeable in synchronization with each other.

5. The image display method according to any one of claims 1 to 3, wherein
in said second display mode, display ranges of said two or more overlay images (61a, 62a, 63a, 64a) included in said second display image group on said sample (9) are changeable in synchronization with each other.

6. The image display method according to any one of claims 1 to 3, wherein
in said second display mode, position indicators are displayed respectively in said two or more overlay images (61a, 62a, 63a, 64a) included in said second display image group, said position indicators (553) each indicating a position in the image, said position indicators being movable in synchronization with each other.

7. The image display method according to any one of claims 1 to 3, wherein
in said first display mode, display scaling factors of said two or more overlay images (61a, 62a, 63a, 64a) included in said first display image group are changeable in synchronization with each other.

8. The image display method according to any one of claims 1 to 3, wherein
in said first display mode, processing for switching said one stained image (84a-84c) that is overlaid with said cell detection image (71a-71c) to another stained image (83a-83c) included in said stained image group (80a-80c) is performed for said two or more visual fields in synchronization with each other.

9. The image display method according to any one of claims 1 to 3, wherein
said detection method in said operation b) (S12) is a detection method using a trained model produced by machine learning.

10. The image display method according to any one of claims 1 to 3, wherein
another cell detection image is prepared for each of said plurality of visual fields (90a-90c), said another cell detection image indicating a cell region (92) detected from said stained image group (80a-80c) by a different detection method, and
in said operation c) (S13), the display mode of said screen (551) is switchable among:
said first display mode;
said second display mode; and
a third display mode in which a third display image group is displayed in order on said screen (551), said third display image group including one overlay image and another overlay image that are obtained for one visual field (90a) among said plurality of visual fields (90a-90c), said one overlay image (64a) being obtained by overlaying said cell detection image (71a) and one stained image (84a) included in said stained image group (80a), said another overlay image (44a) being obtained by overlaying said another cell detection image and said one stained image (84a).

11. The image display method according to claim 10, wherein
in said third display mode, display scaling factors of said one overlay image (64a) and said another overlay image (44a) are changeable in synchronization with each other.

12. The image display method according to claim 10, wherein
in said third display mode, display ranges of said one overlay image (64a) and said another overlay image (44a) on said sample (9) are changeable in synchronization with each other.

13. The image display method according to claim 10, wherein
in said third display mode, position indicators (553) are displayed respectively in said one overlay image (64a) and said another overlay image (44a), said position indicators (553) each indicating a position in the image, said positions indicators being movable in synchronization with each other.

14. An image display device that displays a result of detecting a cell region (92) from a stained image obtained by immunostaining, the image display device comprising:
a display (55) that displays an image;
a storage (501) that stores a stained image group (80a-80c) and a cell detection image (71a-71c) for each of a plurality of visual fields (90a-90c), said stained image group (80a-80c) including a plurality of types of stained images (81a-84a, 81b-84b, 81c-84c) of a sample (9) obtained by immunostaining, said cell detection image (71a-71c) indicating a cell region (92) detected from said stained image group (80a-80c) by a predetermined detection method; and
a display controller (502) that overlays and displays said stained image group (80a-80c) and said cell detection image (71a-71c) on a screen (551) of said display (55),
wherein said screen (551) has a display mode that is switchable under control of said display controller (502) between:
a first display mode in which a first display image group is displayed in order on said screen (551), said first display image group including two or more overlay images (64a-64c) that are obtained respectively for two or more visual fields among said plurality of visual fields (90a-90c), said two or more overlay images (64a-64c) each being obtained by overlaying said cell detection image (71a-71c) and one stained image included in said stained image group (80a-80c); and
a second display mode in which a second display image group is displayed in order on said screen (551), said second display image group including two or more overlay images (61a, 62a, 63a, 64a) that are obtained for one visual field among said plurality of visual fields (90a-90c), said two or more overlay images (61a, 62a, 63a, 64a) each being obtained by overlaying said cell detection image (71a-71c) and one of two or more stained images included in said stained image group (80a-80c).

15. A program for displaying a result of detecting a cell region (92) from a stained image obtained by immunostaining, said program being executed by a computer to:
a) for each of a plurality of visual fields (90a-90c) on a sample (9), prepare (S11) a stained image group (80a-80c) that includes a plurality of types of stained images (81a-84a, 81b-84b, 81c-84c) obtained by immunostaining;
b) for each of said plurality of visual fields (90a-90c), prepare (S12) a cell detection image (71a-71c) that indicates a cell region (92) detected from said stained image group (80a-80c) by a predetermined detection method; and
c) overlay and display (S13) said stained image group (80a-80c) and said cell detection image (71a-71c) on a screen (551),
wherein, in said operation c) (S13), said screen (551) has a display mode that is switchable between:
a first display mode in which a first display image group is displayed in order on said screen (551), said first display image group including two or more overlay images (64a-64c) that are obtained respectively for two or more visual fields among said plurality of visual fields (90a-90c), said two or more overlay images (64a-64c) each being obtained by overlaying said cell detection image (71a-71c) and one stained image included in said stained image group (80a-80c); and
a second display mode in which a second display image group is displayed in order on said screen (551), said second display image group including two or more overlay images (61a, 62a, 63a, 64a) that are obtained for one visual field among said plurality of visual fields (90a-90c), said two or more overlay images (61a, 62a, 63a, 64a) each being obtained by overlaying said cell detection image (71a-71c) and one of two or more stained images included in said stained image group (80a-80c).

## Patentansprüche

1. Bildanzeigeverfahren zum Anzeigen eines Ergebnisses des Detektierens eines Zellbereichs aus einem gefärbten Bild, das durch Immunfärbung erhalten wurde, wobei das Bildanzeigeverfahren umfasst:
a) für jedes von mehreren Sichtfeldern (90a-90c) auf einer Probe (9), Vorbereiten (S11) einer gefärbten Bildgruppe (80a-80c), die mehrere Typen von gefärbten Bildern (81a-84a, 81b-84b, 81c-84c) der Probe (9) enthält, die durch Immunfärbung erhalten wurden;
b) für jedes der mehreren Sichtfelder (90a-90c), Vorbereiten (S12) eines Zelldetektionsbilds (71a-71c), das einen Zellbereich (92) angibt, der aus der gefärbten Bildgruppe (80a-80c) durch ein vorbestimmtes Detektionsverfahren detektiert wurde; und
c) Überlagern und Anzeigen (S13) der gefärbten Bildgruppe (80a-80c) und des Zelldetektionsbilds (71a-71c) auf einem Bildschirm (551),
wobei in der Operation c) (S13) der Bildschirm (551) einen Anzeigemodus aufweist, der umschaltbar ist zwischen:
einem ersten Anzeigemodus, in dem eine erste Anzeigebildgruppe in Reihenfolge auf dem Bildschirm (551) angezeigt wird, wobei die erste Anzeigebildgruppe zwei oder mehr Überlagerungsbilder (64a-64c) enthält, die jeweils für zwei oder mehr Sichtfelder unter den mehreren Sichtfeldern (90a-90c) erhalten werden, wobei die zwei oder mehr Überlagerungsbilder (64a-64c) jeweils durch Überlagern des Zelldetektionsbilds (71a-71c) und eines gefärbten Bilds, das in der gefärbten Bildgruppe (80a-80c) enthalten ist, erhalten werden, und
einem zweiten Anzeigemodus, in dem eine zweite Anzeigebildgruppe in Reihenfolge auf dem Bildschirm (551) angezeigt wird, wobei die zweite Anzeigebildgruppe zwei oder mehr Überlagerungsbilder (61a, 62a, 63a, 64a) enthält, die für ein Sichtfeld unter den mehreren Sichtfeldern (90a-90c) erhalten werden, wobei die zwei oder mehr Überlagerungsbilder (61a, 62a, 63a, 64a) jeweils durch Überlagern des Zelldetektionsbilds (71a-71c) und eines von zwei oder mehr gefärbten Bildern, die in der gefärbten Bildgruppe (80a-80c) enthalten sind, erhalten werden.

2. Bildanzeigeverfahren nach Anspruch 1, wobei
die Operation c) (S13) enthält:
d) Einstellen (S21) des Anzeigemodus des Bildschirms (551) auf den ersten Anzeigemodus, um die erste Anzeigebildgruppe auf dem Bildschirm (551) anzuzeigen;
e) Auswählen (S22) eines Bilds (64a) aus der ersten Anzeigebildgruppe, die in der Operation d) (S21) angezeigt wird; und
f) Umschalten (S23) des Anzeigemodus des Bildschirms (551) von dem ersten Anzeigemodus auf den zweiten Anzeigemodus, um die zweite Anzeigebildgruppe auf dem Bildschirm (551) anzuzeigen, indem ein Sichtfeld, das dem einen Bild (64a) entspricht, das in der Operation e) (S22) ausgewählt wird, als das eine Sichtfeld (90a) in dem zweiten Anzeigemodus verwendet wird.

3. Bildanzeigeverfahren nach Anspruch 2, wobei
in der Operation f) (S23) die zwei oder mehr Überlagerungsbilder (61a, 62a, 63a, 64a), die in der zweiten Anzeigebildgruppe enthalten sind, mit einem Anzeigeskalierungsfaktor, der äquivalent zu einem Anzeigeskalierungsfaktor des einen Bilds (64a) ist, das in der Operation e) (S22) ausgewählt wird, und in einem Anzeigebereich, der äquivalent zu einem Anzeigebereich des einen Bilds auf der Probe (9) ist, angezeigt werden.

4. Bildanzeigeverfahren nach einem der Ansprüche 1 bis 3, wobei
in dem zweiten Anzeigemodus Anzeigeskalierungsfaktoren der zwei oder mehr Überlagerungsbilder (61a, 62a, 63a, 64a), die in der zweiten Anzeigebildgruppe enthalten sind, synchron miteinander veränderbar sind.

5. Bildanzeigeverfahren nach einem der Ansprüche 1 bis 3, wobei
in dem zweiten Anzeigemodus Anzeigebereiche der zwei oder mehr Überlagerungsbilder (61a, 62a, 63a, 64a), die in der zweiten Anzeigebildgruppe enthalten sind, auf der Probe (9) synchron miteinander veränderbar sind.

6. Bildanzeigeverfahren nach einem der Ansprüche 1 bis 3, wobei
in dem zweiten Anzeigemodus Positionsindikatoren jeweils in den zwei oder mehr Überlagerungsbildern (61a, 62a, 63a, 64a), die in der zweiten Anzeigebildgruppe enthalten sind, angezeigt werden, wobei die Positionsindikatoren (553) jeweils eine Position in dem Bild angeben, wobei die Positionsindikatoren synchron miteinander bewegbar sind.

7. Bildanzeigeverfahren nach einem der Ansprüche 1 bis 3, wobei
in dem ersten Anzeigemodus Anzeigeskalierungsfaktoren der zwei oder mehr Überlagerungsbilder (61a, 62a, 63a, 64a), die in der ersten Anzeigebildgruppe enthalten sind, synchron miteinander veränderbar sind.

8. Bildanzeigeverfahren nach einem der Ansprüche 1 bis 3, wobei
in dem ersten Anzeigemodus eine Verarbeitung zum Umschalten des einen gefärbten Bilds (84a-84c), das mit dem Zelldetektionsbild (71a-71c) überlagert ist, auf ein anderes gefärbtes Bild (83a-83c), das in der gefärbten Bildgruppe (80a-80c) enthalten ist, für die zwei oder mehr Sichtfelder synchron miteinander durchgeführt wird.

9. Bildanzeigeverfahren nach einem der Ansprüche 1 bis 3, wobei
das Detektionsverfahren in der Operation b) (S12) ein Detektionsverfahren unter Verwendung eines trainierten Modells ist, das durch maschinelles Lernen erzeugt wird.

10. Bildanzeigeverfahren nach einem der Ansprüche 1 bis 3, wobei
ein anderes Zelldetektionsbild für jedes der mehreren Sichtfelder (90a-90c) vorbereitet wird, wobei das andere Zelldetektionsbild einen Zellbereich (92) angibt, der aus der gefärbten Bildgruppe (80a-80c) durch ein anderes Detektionsverfahren detektiert wurde, und
in der Operation c) (S13) der Anzeigemodus des Bildschirms (551) umschaltbar ist zwischen:
dem ersten Anzeigemodus;
dem zweiten Anzeigemodus; und
einem dritten Anzeigemodus, in dem eine dritte Anzeigebildgruppe in Reihenfolge auf dem Bildschirm (551) angezeigt wird, wobei die dritte Anzeigebildgruppe ein Überlagerungsbild und ein anderes Überlagerungsbild enthält, die für ein Sichtfeld (90a) unter den mehreren Sichtfeldern (90a-90c) erhalten werden, wobei das eine Überlagerungsbild (64a) durch Überlagern des Zelldetektionsbilds (71a) und eines gefärbten Bilds (84a), das in der gefärbten Bildgruppe (80a) enthalten ist, erhalten wird, wobei das andere Überlagerungsbild (44a) durch Überlagern des anderen Zelldetektionsbilds und des einen gefärbten Bilds (84a) erhalten wird.

11. Bildanzeigeverfahren nach Anspruch 10, wobei
in dem dritten Anzeigemodus Anzeigeskalierungsfaktoren des einen Überlagerungsbilds (64a) und des anderen Überlagerungsbilds (44a) synchron miteinander veränderbar sind.

12. Bildanzeigeverfahren nach Anspruch 10, wobei
in dem dritten Anzeigemodus Anzeigebereiche des einen Überlagerungsbilds (64a) und des anderen Überlagerungsbilds (44a) auf der Probe (9) synchron miteinander veränderbar sind.

13. Bildanzeigeverfahren nach Anspruch 10, wobei
in dem dritten Anzeigemodus Positionsindikatoren (553) jeweils in dem einen Überlagerungsbild (64a) und dem anderen Überlagerungsbild (44a) angezeigt werden, wobei die Positionsindikatoren (553) jeweils eine Position in dem Bild angeben, wobei die Positionsindikatoren synchron miteinander bewegbar sind.

14. Bildanzeigevorrichtung, die ein Ergebnis des Detektierens eines Zellbereichs (92) aus einem gefärbten Bild, das durch Immunfärbung erhalten wurde, anzeigt, wobei die Bildanzeigevorrichtung umfasst:
eine Anzeige (55), die ein Bild anzeigt;
einen Speicher (501), der eine gefärbte Bildgruppe (80a-80c) und ein Zelldetektionsbild (71a-71c) für jedes von mehreren Sichtfeldern (90a-90c) speichert, wobei die gefärbte Bildgruppe (80a-80c) mehrere Typen von gefärbten Bildern (81a-84a, 81b-84b, 81c-84c) einer Probe (9) enthält, die durch Immunfärbung erhalten wurde, wobei das Zelldetektionsbild (71a-71c) einen Zellbereich (92) angibt, der aus der gefärbten Bildgruppe (80a-80c) durch ein vorbestimmtes Detektionsverfahren detektiert wurde; und
eine Anzeigesteuerung (502), die die gefärbte Bildgruppe (80a-80c) und das Zelldetektionsbild (71a-71c) auf einem Bildschirm (551) der Anzeige (55) überlagert und anzeigt,
wobei der Bildschirm (551) einen Anzeigemodus aufweist, der unter Steuerung der Anzeigesteuerung (502) umschaltbar ist zwischen:
einem ersten Anzeigemodus, in dem eine erste Anzeigebildgruppe in Reihenfolge auf dem Bildschirm (551) angezeigt wird, wobei die erste Anzeigebildgruppe zwei oder mehr Überlagerungsbilder (64a-64c) enthält, die jeweils für zwei oder mehr Sichtfelder unter den mehreren Sichtfeldern (90a-90c) erhalten werden, wobei die zwei oder mehr Überlagerungsbilder (64a-64c) jeweils durch Überlagern des Zelldetektionsbilds (71a-71c) und eines gefärbten Bilds, das in der gefärbten Bildgruppe (80a-80c) enthalten ist, erhalten werden; und
einem zweiten Anzeigemodus, in dem eine zweite Anzeigebildgruppe in Reihenfolge auf dem Bildschirm (551) angezeigt wird, wobei die zweite Anzeigebildgruppe zwei oder mehr Überlagerungsbilder (61a, 62a, 63a, 64a) enthält, die für ein Sichtfeld unter den mehreren Sichtfeldern (90a-90c) erhalten werden, wobei die zwei oder mehr Überlagerungsbilder (61a, 62a, 63a, 64a) jeweils durch Überlagern des Zelldetektionsbilds (71a-71c) und eines von zwei oder mehr gefärbten Bildern, die in der gefärbten Bildgruppe (80a-80c) enthalten sind, erhalten werden.

15. Programm zum Anzeigen eines Ergebnisses des Detektierens eines Zellbereichs (92) aus einem gefärbten Bild, das durch Immunfärbung erhalten wurde, wobei das Programm durch einen Computer ausgeführt wird zum:
a) für jedes von mehreren Sichtfeldern (90a-90c) auf einer Probe (9), Vorbereiten (S11) einer gefärbten Bildgruppe (80a-80c), die mehrere Typen von gefärbten Bildern (81a-84a, 81b-84b, 81c-84c) enthält, die durch Immunfärbung erhalten wurden;
b) für jedes der mehreren Sichtfelder (90a-90c), Vorbereiten (S12) eines Zelldetektionsbilds (71a-71c), das einen Zellbereich (92) angibt, der aus der gefärbten Bildgruppe (80a-80c) durch ein vorbestimmtes Detektionsverfahren detektiert wurde; und
c) Überlagern und Anzeigen (S13) der gefärbten Bildgruppe (80a-80c) und des Zelldetektionsbilds (71a-71c) auf einem Bildschirm (551),
wobei in der Operation c) (S13) der Bildschirm (551) einen Anzeigemodus aufweist, der umschaltbar ist zwischen:
einem ersten Anzeigemodus, in dem eine erste Anzeigebildgruppe in Reihenfolge auf dem Bildschirm (551) angezeigt wird, wobei die erste Anzeigebildgruppe zwei oder mehr Überlagerungsbilder (64a-64c) enthält, die jeweils für zwei oder mehr Sichtfelder unter den mehreren Sichtfeldern (90a-90c) erhalten werden, wobei die zwei oder mehr Überlagerungsbilder (64a-64c) jeweils durch Überlagern des Zelldetektionsbilds (71a-71c) und eines gefärbten Bilds, das in der gefärbten Bildgruppe (80a-80c) enthalten ist, erhalten werden; und
einem zweiten Anzeigemodus, in dem eine zweite Anzeigebildgruppe in Reihenfolge auf dem Bildschirm (551) angezeigt wird, wobei die zweite Anzeigebildgruppe zwei oder mehr Überlagerungsbilder (61a, 62a, 63a, 64a) enthält, die für ein Sichtfeld unter den mehreren Sichtfeldern (90a-90c) erhalten werden, wobei die zwei oder mehr Überlagerungsbilder (61a, 62a, 63a, 64a) jeweils durch Überlagern des Zelldetektionsbilds (71a-71c) und eines von zwei oder mehr gefärbten Bildern, die in der gefärbten Bildgruppe (80a-80c) enthalten sind, erhalten werden.

## Revendications

1. Procédé d'affichage d'images pour afficher un résultat de détection d'une région cellulaire d'une image colorée par immunocoloration, le procédé d'affichage d'images comprenant :
a) pour chacun d'une pluralité de champs visuels (90a-90c) sur un échantillon (9), préparer (S11) un groupe d'images colorées (80a-80c) qui comprend une pluralité de types d'images colorées (81a-84a, 81b-84b, 81c-84c) dudit échantillon (9) obtenues par immunocoloration ;
b) pour chacun de ladite pluralité de champs visuels (90a-90c), préparer (S12) une image de détection cellulaire (71a-7c) qui indique une région cellulaire (92) détectée dudit groupe d'images colorées (80a-80c) par un procédé de détection prédéterminé ; et
c) superposer et afficher (S13) ledit groupe d'images colorées (80a-80c) et ladite image de détection cellulaire (71a-71c) sur un écran (551),
dans lequel dans ladite opération c) (S13), ledit écran (551) a un mode d'affichage qui est commutable entre :
un premier mode d'affichage dans lequel un premier groupe d'images à afficher est affiché en ordre sur ledit écran (551), ledit premier groupe d'images à afficher comprenant deux images superposées ou plus (64a-64c) qui sont obtenues respectivement pour deux champs visuels ou plus parmi ladite pluralité de champs visuels (90a-90c), lesdites deux images superposées ou plus (64a-64c) étant obtenues chacune en superposant ladite image de détection cellulaire (71a-71c) et une image colorée incluse dans ledit groupe d'images colorées (80a-80c), et
un deuxième mode d'affichage dans lequel un deuxième groupe d'images à afficher est affiché en ordre sur ledit écran (551), ledit deuxième groupe d'images à afficher comprenant deux images superposées ou plus (61a, 62a, 63a, 64a) qui sont obtenues d'un champ visuel parmi ladite pluralité de champs visuels (90a-90c), lesdites deux images superposées ou plus (61a, 62a, 63a, 64a) étant obtenues chacune en superposant ladite image de détection cellulaire (71a-71c) et l'une des deux images colorées ou plus incluses dans ledit groupe d'images colorées (80a-80c).

2. Procédé d'affichage d'images selon la revendication 1, dans lequel ladite opération c) (S13) comprend :
d) régler (S21) le mode d'affichage dudit écran (551) audit premier mode d'affichage pour afficher ledit premier groupe d'images à afficher sur ledit écran (551) ;
e) sélectionner (S22) une image (64a) dudit premier groupe d'images à afficher affichée dans ladite opération d) (S21) ; et
f) commuter (S23) le mode d'affichage dudit écran (551) dudit premier mode d'affichage audit deuxième mode d'affichage pour afficher ledit deuxième groupe d'images à afficher sur ledit écran (551) en utilisant un champ visuel qui correspond à ladite une image (64a) sélectionnée dans ladite opération e) (S22) comme ledit un champ visuel (90a) dans ledit deuxième mode d'affichage.

3. Procédé d'affichage d'images selon la revendication 2, dans lequel
dans ladite opération f) (S23), lesdites deux images superposées ou plus (61a, 62a, 63a, 64a) incluses dans ledit deuxième groupe d'images à afficher sont affichées avec un facteur d'échelle d'affichage équivalent à un facteur d'échelle d'affichage de ladite une image (64a) sélectionnée dans ladite opération e) (S22) et dans une plage d'affichage équivalente à une plage d'affichage de ladite une image sur ledit échantillon (9).

4. Procédé d'affichage d'images selon l'une quelconque des revendications 1 à 3, dans lequel
dans ledit deuxième mode d'affichage, les facteurs d'échelle d'affichage desdites deux images superposées ou plus (61a, 62a, 63a, 64a) incluses dans ledit deuxième groupe d'images à afficher sont interchangeables en synchronisation l'un avec l'autre.

5. Procédé d'affichage d'images selon l'une quelconque des revendications 1 à 3, dans lequel
dans ledit deuxième mode d'affichage, les plages d'affichage desdites deux images superposées ou plus (61a, 62a, 63a, 64a) incluses dans ledit deuxième groupe d'images à afficher sur ledit échantillon (9) sont interchangeables en synchronisation l'une avec l'autre.

6. Procédé d'affichage d'images selon l'une quelconque des revendications 1 à 3, dans lequel
dans ledit deuxième mode d'affichage, des indicateurs de position sont affichés respectivement dans lesdites deux images superposées ou plus (61a, 62a, 63, 64a) incluses dans ledit deuxième groupe d'images à afficher, lesdits indicateurs de position (553) indiquant chacun une position dans l'image, lesdits indicateurs de position étant déplaçables en synchronisation les uns avec les autres.

7. Procédé d'affichage d'images selon l'une quelconque des revendications 1 à 3, dans lequel
dans ledit premier mode d'affichage, les facteurs d'échelle d'affichage desdites deux images superposées ou plus (61a, 62a, 63a, 64a) incluses dans ledit premier groupe d'images à afficher sont interchangeables en synchronisation l'un avec l'autre.

8. Procédé d'affichage d'images selon l'une quelconque des revendications 1 à 3, dans lequel
dans ledit premier mode d'affichage, le traitement pour passer de ladite image colorée (84a-84c) sur laquelle ladite image de détection cellulaire (71a-71c) est superposée à une autre image colorée (83a-83c) incluse dans ledit groupe d'images colorées (80a-80c) est effectué pour lesdits deux champs visuels ou plus en synchronisation l'un avec l'autre.

9. Procédé d'affichage d'images selon l'une quelconque des revendications 1 à 3, dans lequel
ledit procédé de détection dans ladite opération b) (S12) est un procédé de détection utilisant un modèle entraîné produit par apprentissage machine.

10. Procédé d'affichage d'images selon l'une quelconque des revendications 1 à 3, dans lequel
une autre image de détection cellulaire est préparée pour chacun de ladite pluralité de champs visuels (90a-90c), ladite une autre image de détection cellulaire indiquant une région cellulaire (92) détectée dudit groupe d'images colorées (80a-80c) par un procédé de détection différent, et
dans ladite opération c) (S13), le mode d'affichage dudit écran (551) est commutable entre :
ledit premier mode d'affichage ;
ledit deuxième mode d'affichage ; et
un troisième mode d'affichage dans lequel un troisième groupe d'images à afficher est affiché en ordre sur ledit écran (551), ledit troisième groupe d'images à afficher comprenant une image superposée et une autre image superposée qui sont obtenues d'un champ visuel (90a) parmi ladite pluralité de champs visuels (90a-90c), ladite une image superposée (64a) étant obtenue en superposant ladite image de détection cellulaire (71a) et une image colorée (84a) incluse dans ledit groupe d'images colorées (80a), ladite une autre image superposée (44a) étant obtenue en superposant ladite une autre image de détection cellulaire et ladite une image colorée (84a).

11. Procédé d'affichage d'images selon la revendication 10, dans lequel
dans ledit troisième mode d'affichage, les facteurs d'échelle d'affichage de ladite une image superposée (64a) et de ladite une autre image superposée (44a) sont interchangeables en synchronisation l'un avec l'autre.

12. Procédé d'affichage d'images selon la revendication 10, dans lequel
dans ledit troisième mode d'affichage, les plages d'affichage de ladite une image superposée (64a) et de ladite une autre image superposée (44a) sur ledit échantillon (9) sont interchangeables en synchronisation l'une avec l'autre.

13. Procédé d'affichage d'images selon la revendication 10, dans lequel
dans ledit troisième mode d'affichage, les indicateurs de position (553) sont affichés respectivement dans ladite une image superposée (64a) et dans ladite une autre image superposée (44a), lesdits indicateurs de position (553) indiquant chacun une position dans l'image, lesdits indicateurs de position étant déplaçables en synchronisation les uns avec les autres.

14. Dispositif d'affichage d'images qui affiche un résultat de détection d'une région cellulaire (92) d'une image colorée obtenue par immunocoloration, le dispositif d'affichage d'images comprenant :
un affichage (55) qui affiche une image ;
un stockage (501) qui stocke un groupe d'images colorées (80a-80c) et une image de détection cellulaire (71a-71c) pour chacun d'une pluralité de champs visuels (90a-90c), ledit groupe d'images colorées (80a-80c) comprenant une pluralité de types d'images colorées (81a-84a, 81b-84b, 81c-84c) d'un échantillon (9) obtenues par immunocoloration, ladite image de détection cellulaire (71a-71c) indiquant une région cellulaire (92) détectée dudit groupe d'images colorées (80a-80c) par un procédé de détection prédéterminé ; et
un contrôleur d'affichage (502) qui superpose et affiche ledit groupe d'images colorées (80a-80c) et ladite image de détection cellulaire (71a-71c) sur un écran (551) dudit affichage (55),
dans lequel ledit écran (551) a un mode d'affichage qui est commutable sous le contrôle dudit contrôleur d'affichage (502) entre :
un premier mode d'affichage dans lequel un premier groupe d'images à afficher est affiché en ordre sur ledit écran (551), ledit premier groupe d'images à afficher comprenant deux images superposées ou plus (64a-64c) qui sont obtenues respectivement pour deux champs visuels ou plus parmi ladite pluralité de champs visuels (90a-90c), lesdites deux images superposées ou plus (64a-64c) étant obtenues chacune en superposant ladite image de détection cellulaire (71a-71c) et une image colorée incluse dans ledit groupe d'images colorées (80a-80c) ; et
un deuxième mode d'affichage dans lequel un deuxième groupe d'images à afficher est affiché en ordre sur ledit écran (551), ledit deuxième groupe d'images à afficher comprenant deux images superposées ou plus (61a, 62a, 63a, 64a) qui sont obtenues pour un champ visuel parmi ladite pluralité de champs visuels (90a-90c). lesdites deux images superposées ou plus (61a, 62a, 63a, 64a) étant obtenues chacune en superposant ladite image de détection cellulaire (71a-71c) et l'une de deux images colorées ou plus incluses dans ledit groupe d'images colorées (80a-80c).

15. Programme pour afficher un résultat de détection d'une région cellulaire (92) d'une image colorée obtenue par immunocoloration, ledit programme étant exécuté par un ordinateur afin de :
a) pour chacun d'une pluralité de champs visuels (90a-90c) sur un échantillon (9), préparer (S11) un groupe d'images colorées (80a-80c) qui comprend une pluralité de types d'images colorées (81a-84a, 81b-84b, 81c-84c) obtenues par immunolocoration ;
b) pour chacun de ladite pluralité de champs visuels (90a-90c), préparer (S12) une image de détection cellulaire (71a-71c) qui indique une région cellulaire (92) détectée dudit groupe d'images colorées (80a-80c) par un procédé de détection prédéterminé ; et
c) superposer et afficher (S13) ledit groupe d'images colorées (80a-80c) et ladite image de détection cellulaire (71a-71c) sur un écran (551),
dans lequel, dans ladite opération c) (S13), ledit écran (551) a un mode d'affichage qui est commutable entre :
un premier mode d'affichage dans lequel un premier groupe d'images à afficher est affiché en ordre sur ledit écran (551), ledit premier groupe d'images à afficher comprenant deux images superposées ou plus (64a-64c) qui sont obtenues respectivement de deux champs visuels ou plus parmi ladite pluralité de champs visuels (90a-90c), lesdites deux images superposées ou plus (64a-64c) étant obtenues chacune en superposant ladite image de détection cellulaire (71a-71c) et une image colorée incluse dans ledit groupe d'images colorées (80a-80c) ; et
un deuxième mode d'affichage dans lequel un deuxième groupe d'images à afficher est affiché en ordre sur ledit écran (551), ledit deuxième groupe d'images à afficher comprenant deux images superposées ou plus (61a, 62a, 63a, 64a) qui sont obtenues d'un champ visuel parmi ladite pluralité de champs visuels (90a-90c), lesdites deux images superposées ou plus (61a, 62a, 63a, 64a) étant obtenues chacune en superposant ladite image de détection cellulaire (71a-71c) et l'une de deux images colorées ou plus incluses dans ledit groupe d'images colorées (80a-80c).
